# EUROPÄISCHE PATENTSCHRIFT

(11) **EP 2 754 357 B1**
(45) Veröffentlichungstag und Bekanntmachung des Hinweises auf die Patenterteilung: **18.07.2018**
(21) Anmeldenummer: 13150669.3
(22) Anmeldetag: 09.01.2013
(51) Int. Cl.: A24C 5/00, A24C 5/35

(54) **Verfahren zur bedarfsgesteuerten Versorgung und Entsorgung mindestens zweier Produktionsstationen der Tabak verarbeitenden Industrie mit vollen und/oder leeren Transporteinheiten**
Method for supply and removal of full and/or empty transport units from at least two production stations in the tobacco-processing industry according to requirements
Procédé destiné à l'alimentation et à l'élimination en fonction des besoins d'au moins deux stations de production de l'industrie de traitement du tabac avec des unités de transport pleines et/ou vides

(43) Veröffentlichungstag der Anmeldung: 16.07.2014
(73) Patentinhaber: Hauni Maschinenbau GmbH, 21033 Hamburg (DE)
(72) Erfinder: Horn, Matthias, 22926 Ahrensburg (DE); Ulrich, Rüdiger, 21079 Hamburg (DE); Flügge, Thomas, 21502 Geesthacht (DE); Dittmar, Dagmar, Dr., 22589 Hamburg (DE); Kreysern, Jan, 37120 Bovenden (DE); Kitzing, Walter, 25421 Pinneberg (DE); Becker, Carsten, 21465 Wentorf (DE); Busse-Riepshoff, Uwe, 21244 Buchholz (DE)
(74) Vertreter: Stork Bamberger Patentanwälte PartmbB

(56) Entgegenhaltungen:
- EP-A1- 0 507 575
- EP-A1- 2 481 305
- EP-A2- 0 923 885
- DE-A1- 4 404 929
- GB-A- 1 234 776
- GB-A- 1 518 962

## Beschreibung

Die Erfindung betrifft ein Verfahren zur bedarfsgesteuerten Versorgung und Entsorgung mindestens zweier Produktionsstationen der Tabak verarbeitenden Industrie mit vollen und/oder leeren Transporteinheiten, die mittels selbstfahrenden Transportfahrzeugen innerhalb eines Speicher- und Transportsystems, das als Überkopf-System mit einem mindestens ein Lagerregal umfassenden Zentrallager als Speichersystem und einem zum Transportsystem gehörenden Schienennetz, an das jede Produktionsstation angeschlossen ist, ausgebildet ist, schienengebunden zur Versorgung an jede Produktionsstation heran und zur Entsorgung von jeder Produktionsstation weg verfahren werden.

Solche Verfahren kommen in der Tabak verarbeitenden Industrie zum Einsatz, um Produktionsstationen mit den zur Produktion notwendigen Artikeln zu versorgen bzw. die jeweils produzierten Artikel von der jeweiligen Produktionsstation abzuholen. Mit dem genannten Verfahren wird eine Kopplung von Produktionsstationen unterstützt, welche beispielsweise unterschiedliche Produktionsgeschwindigkeiten bzw. Produktionsleistungen haben bzw. an denen unterschiedliche Marken produziert werden. Mit anderen Worten wird eine unabhängige Produktion der einzelnen Produktionsstationen angestrebt. Die Tabak verarbeitende Industrie betrifft nicht nur die Herstellung von Tabak enthaltenden Zwischenprodukten und Fertigprodukten sondern explizit auch die Herstellung von (Zwischen-)Produkten, die keinen Tabak enthalten müssen, wie z.B. die Filter sowie das Verpacken solcher Artikel. Mit anderen Worten werden solche Verfahren eingesetzt, um den Materialfluss insbesondere innerhalb einer Filter- und Zigarettenproduktion zu steuern, also den Transport und die Lagerung von Filterstäben und Zigaretten zur Zigarettenherstellung und -verpackung zu koordinieren.

Das gattungsgemäße Verfahren schließt neben Verfahren z.B. zur Herstellung von Zigaretten oder Filterzigaretten somit z.B. auch solche Verfahren ein, die ausschließlich auf die Herstellung von Filtern oder Multisegmentfiltern sowie auf das Verpacken der genannten Artikel gerichtet sind. Die genannten Artikel werden mittels der Produktionsstationen hergestellt, wobei Produktionsstationen sowohl so genannte Maker, also Herstellungsmaschinen beispielsweise des Typs KDF, PROTOS aus dem Hause der Anmelderin, oder Weiterverarbeitungsmaschinen, beispielsweise eine Filteransetzmaschine vom Typ MAX oder eine Multisegmentfilterherstellungsmaschine vom Typ MERLIN, aus dem Hause der Anmelderin sein können als auch Filterstabsendestationen, aus dem Hause der Anmelderin z.B. unter dem Typ FILTROMAT bekannt, oder sowie so genannte Packer zum Verpacken der hergestellten Artikel. Die Weiterverarbeitungsmaschinen können jedoch auch Herstellungsmaschinen sein. Mit der Herstellung von Produkten der Tabak verarbeitenden Industrie ist die Herstellung bzw. Produktion sowohl aller Zwischenprodukte als auch aller Fertigprodukte gemeint. Rein beispielhaft sind als Zwischenprodukte, die auch Halbfertigprodukte genannt werden, z.B. Filter, Filtersegmente, Multifilter, Tabakstöcke oder dergleichen zu nennen. Die Fertigprodukte können beispielsweise Zigaretten, Filterzigaretten, Zigarettenpackungen, aus mehreren Zigarettenpackungen gebildete Zigarettenstangen und weitere in der Tabak verarbeitenden Industrie übliche Fertig- oder Endprodukte sein. Allerdings können die weiter oben genannten Zwischenprodukte auch Fertigprodukte sein.

Grundsätzlich ist es sinnvoll (z.B. Vorratsspeicherung) und/oder notwendig (z.B. Aushärteprozesse etc.), die Zwischenprodukte oder Fertigprodukte zu lagern oder zwischenzuspeichern. Dazu werden die Zwischenprodukte oder Fertigprodukte an den jeweiligen Produktionsstationen in Transporteinheiten gefüllt, mittels des Transportsystems einem Speichersystem zugeführt und dort gelagert, zur Weiterverarbeitung wieder an eine Produktionsstation transportiert und dort entleert, weshalb an den Produktionsstationen entsprechende Stationen zum Verändern des Füllstandes der Transporteinheiten, also Vorrichtungen zum Befüllen und/oder Entleeren der Transporteinheiten, vorgesehen sind.

Um alle diese Artikel der Tabak verarbeitenden Industrie, also die Zwischenprodukte, die Fertigprodukte, aber auch die bei der Herstellung dieser Zwischenprodukte und Fertigprodukte eingesetzten Materialien und Zutaten einem Speicher zuzuführen bzw. aus dem Speicher an die jeweiligen Produktionsstationen zu transportieren, sind Transportsysteme bekannt, mittels denen die Produkte, die in oder auf einem Transportträger lagern, von einer Produktionsstation an einen Speicherplatz in dem Speicher und von einem Speicherplatz des Speichers an eine Produktionsstation gefördert werden. Das Speicher- und Transportsystem bildet quasi das Bindeglied zwischen den einzelnen Produktionsstationen. Anders ausgedrückt verbindet das Speicher- und Transportsystem die Produktionsstationen zur Herstellung der Zwischenprodukte und der Fertigprodukte und die Stationen zum Befüllen und/oder Entleeren der Transporteinheiten miteinander, so dass eine Art geschlossenes Logistik-System mit mindestens einem Zugang und mindestens einem Ausgang gebildet ist.

Als Speicher- und Transportsystem sind im Stand der Technik z.B. Schrank- oder Regalsysteme (als Speicher mit mindestens einem Speicherplatz) mit Fächern zur Aufnahme einzelner oder zu Gruppen zusammengestellter Transporteinheiten bekannt, wobei die Artikel direkt oder indirekt über die Transporteinheiten mittels eines Handhabungs- bzw. Transportsystems innerhalb der Anordnung transportiert werden. Als Handhabungs- bzw. Transportsysteme sind aus dem Stand der Technik beispielsweise so genannte Flurfördersysteme bekannt. Bei diesen Systemen werden die Transportfahrzeuge auf dem Boden entlang im Boden angeordneter Führungen bzw. Schleifenführungen angetrieben und bewegt. Solche Systeme weisen jedoch neben einem sehr hohen Platzbedarf am Boden den weiteren Nachteil auf, dass die führerlosen Transportfahrzeuge eine Gefahr für sich im Bereich der Anordnung befindliche Personen darstellen. Des Weiteren ist ein solches Transportsystem nur in einer Ebene (am Boden) aktiv einsetzbar, was die Einsatzmöglichkeiten beschränkt. Ein entsprechendes Flurfördersystem ist z.B. in der deutschen Offenlegungsschrift DE 25 38 567 beschrieben.

Aus dem Stand der Technik ist weiterhin bekannt, Hängefördersysteme als Transportsysteme einzusetzen. Die deutsche Offenlegungsschrift DE 2 107 825 beschreibt ein Gondelsystem, bei dem die Transporteinheiten hängend transportiert werden. Dies hat jedoch den Nachteil, dass die in oder auf den Transporteinheiten befindlichen Artikel bzw. Materialien dazu neigen, mit den Gondeln zu pendeln oder zu schwingen, was insbesondere bei stabförmigen Artikeln, also Artikeln mit einem runden oder im Wesentlichen runden Querschnitt, wie z.B. Filtern, Filtersegmenten, Tabakstöcken und dergleichen, dazu führt, dass diese sich innerhalb der Transporteinheit verschieben und querlegen. Man spricht in diesem Zusammenhang auch von so genannten Querfliegern.

Die EP 0 507 575 A1 beschreibt eine Vorrichtung und ein Verfahren zum Transportieren von Material in Trägern entlang eines einbahnigen Schienensystems. In das Schienensystem sind Belade- und Entladestationen integriert. Mit der bekannten Vorrichtung und dem Verfahren werden Produktionsstationen der Tabak verarbeitenden Industrie mit den notwendigen Materialien versorgt, nämlich insbesondere Zuschnitten und Bobinen.

Die bekannten Systeme und Verfahren weisen jedoch neben den genannten Nachteilen des Transportsystems das Problem auf, dass sie sehr statisch, also wenig flexibel bezüglich der Produktionsplanung sind und des Weiteren lange Transportstrecken und Transportzeiten bei der Beschickung der einzelnen Produktionsstationen aufweisen, wodurch der Materialfluss innerhalb des Systems beschränkt ist. Ein weiterer Nachteil besteht darin, dass die bekannten Verfahren auf die Versorgung und Entsorgung stabförmiger Artikel beschränkt sind, wodurch die Flexibilität solcher Verfahren und Systeme ebenfalls eingeschränkt ist. Anders ausgedrückt sind diverse Arbeits- bzw. Verfahrensschritte manuell auszuführen, wodurch die Belastung der Bedienpersonen hoch ist und Fehlerquellen existieren.

Der Erfindung liegt demnach die Aufgabe zugrunde, ein Verfahren vorzuschlagen, das die Möglichkeiten der Produktionsplanung erweitert und den Materialfluss zwischen den Produktionsstationen optimiert.

Diese Aufgabe wird durch ein eingangs genanntes Verfahren gelöst, das durch folgende Schritte gekennzeichnet ist: a) Anfordern einer vollen oder leeren Transporteinheit, die innerhalb des Speicher- und Transportsystems zur Verfügung steht, durch eine Übergabeeinrichtung, die ein Bindeglied zwischen dem Speicher- und Transportsystem und der zugehörigen Produktionsstation bildet, bei einer Materialflusssteuerung, b) Vergeben eines Transportauftrags durch die Materialflusssteuerung an ein Transportfahrzeug mit der angeforderten vollen oder leeren Transporteinheit, c) Verfahren des Transportfahrzeugs mit der vollen oder leeren Transporteinheit in der Transportebene auf dem Schienennetz von der Startposition des Transportfahrzeugs bis an die den Transportauftrag auslösende Übergabeeinrichtung einer Produktionsstation, die in einer Produktionsebene unterhalb der Transportebene liegt, heran, d) Übergeben der vollen oder leeren Transporteinheit vom Transportfahrzeug an die Übergabeeinrichtung an einer Übergabeposition, e) Absenken der vollen oder leeren Transporteinheit aus der Transportebene in eine unterhalb der Transportebene liegende Übergabeebene mittels einer Liftanordnung, wobei die Schritte d) und e) auch in umgekehrter Reihenfolge ausgeführt werden können und das Transportfahrzeug nach dem Übergeben der vollen oder leeren Transporteinheit an die Übergabeeinrichtung für einen nächsten Transportauftrag freigegeben wird, wobei die vollen oder leeren Transporteinheiten, die jeweils aus einem Ladungsträger und einem Ladegutträger gebildet sind, nach dem Übergeben vom Transportfahrzeug an die Übergabeeinrichtung mit der Liftanordnung vertikal nach unten in eine erste Übergabeebene transportiert werden, wobei der volle oder leere Ladegutträger in der unteren Übergabeebene vom Ladungsträger abgenommen, zu einer Station zum Verändern des Füllstandes der Ladegutträger transportiert und an diese übergeben wird. Die erfindungsgemäße Lösung, die Transportfahrzeuge mit den vollen und/oder leeren Transporteinheiten vom Boden gelöst, also oberhalb der Bodenebene ("overhead") zu transportieren, ist deutlich platzsparender gegenüber herkömmlichen Verfahren und eröffnet die Möglichkeit, die Transporteinheiten auf kürzestem Wege, also materialflussoptimiert, zu den jeweiligen Zielorten zu transportieren. Des Weiteren erleichtert das Verfahren ein einfaches und schrittweises Einführen/Implementieren in vorhandene Produktionssysteme. Das erfindungsgemäße Verfahren gewährleistet neben dem Fortfall manueller Tätigkeit bei der Versorgung und Entsorgung der Produktionsstationen mit vollen und/oder leeren Transporteinheiten eine Vielzahl weiterer Vorteile, die im Folgenden aufgezählt sind.

Die Herstellungsmaschinen z.B. für die stabförmigen Artikel sind von einer Packmaschine entkoppelt, so dass die einzelnen Produktionsmaschinen unabhängig voneinander produzieren können. Insbesondere ist die Produktionsplanung durch den optimierten Materialfluss erweitert, da durch das Entkoppeln der Maker von den Packern unterschiedliche Zeitpunkte für den Markenwechsel an den Makern einerseits und den Packern andererseits gewählt werden können. Die Materialflusssteuerung als Steuerungseinheit mit Hardware- und Softwarekomponenten kann auch als Verkehrsrechner bezeichnet werden und umfasst ein Netzwerk zwischen den einzelnen Produktionsstationen sowie dem Speicher- und Transportsystem mit den Transportfahrzeugen, um eine bedarfsgerechte Materialversorgung der Produktionsstationen sicherzustellen. Das Anfordern der Transporteinheit erfolgt grundsätzlich von der jeweiligen Übergabeeinrichtung. Allerdings kann diese Meldung auch von Produktionsstationen über die Übergabeeinrichtung erfolgen.

Ladungsträger sind passive Hilfsmittel zur Lagerung und zum Transport der Ladegutträger. Die Ladegutträger selbst sind die die Artikel oder das Material tragenden Hilfsmittel. Als Ladegutträger sind beispielhaft Schrägen, Boxen, Behälter, Paletten, Aufnahmedorne für Bobinen oder Werkzeugträger genannt. Dadurch, dass die Transporteinheiten erst nach der Übergabe aus dem Speicher- und Transportsystem an die Übergabeeinrichtung abgesenkt werden, ist das Transportfahrzeug frühzeitig wieder frei, so dass dieses für nachfolgende Transportaufträge zur Verfügung steht. Des Weiteren verfahren die Transportfahrzeuge außerhalb des Zentrallagers und/oder der verteilten Lager ausschließlich in der Transportebene, verlassen also das Transportsystem nicht, was zum einen dazu führt, dass auf Übergaben der Transportfahrzeuge verzichtet werden kann und zum anderen sichergestellt wird, dass die zu transportierenden Transporteinheiten belastungsarm innerhalb des Transportsystems gehandhabt werden.

Vorteilhafterweise fordern zusätzlich zu den Übergabeeinrichtungen auch im Bereich des Schienennetzes ausgebildete Pufferspeicher und/oder dem Transportsystem zugeordnete Zwischenspeicher, die als mindestens ein Lagerregal aufweisendes, dezentrales Lager neben dem Zentrallager zum Speichersystem gehören, volle oder leere Transporteinheiten bei der Materialflusssteuerung an und werden mittels der Transportfahrzeuge beliefert. Dadurch kann eine Verkürzung der Transportstrecke bzw. eine Kompensation der Transportzeit erreicht werden, da an unterschiedlichen Positionen innerhalb des Speicher- und Transportsystems angeforderte Transporteinheiten bereitstehen. Ein weiterer Vorteil dezentraler Lager liegt darin, dass die einzelnen Lagerbereiche einfacher voneinander getrennt werden können. Des Weiteren können lokale Speicher z.B. im Bereich der Übergabeeinrichtungen minimiert werden. Die Kapazität der Pufferspeicher und der Zwischenspeicher kann variabel sein und hängt beispielsweise von der jeweiligen Transportstreckenlänge (Transportzeit) und der Leistung der angeschlossenen Produktionsstation ab.

In einer zweckmäßigen Weiterbildung des Verfahrens werden die Transportaufträge in der Reihenfolge ihrer Prioritäten vergeben, wobei die Priorität wahlweise aus der Dringlichkeit und/oder dem Vorrang eines Materials und/oder dem Vorrang einer Übergabeeinrichtung bzw. Produktionsstation und/oder dem Vorrang eines Pufferspeichers oder eines Zwischenspeichers und/oder dem Vorrang von Produktionsaufträgen durch die Materialflusssteuerung ermittelt wird. Die einzelnen Kriterien können wiederum priorisiert bzw. gewichtet werden. Damit lässt sich die Versorgung/Entsorgung flexibel und individuell an die jeweiligen (Kunden-Erfordernisse anpassen. Insbesondere kann die Versorgung der Produktionsstationen mit vollen Transporteinheiten nach dem FiFo-Prinzip erfolgen, um eine Überalterung der im Speicher- und Transportsystem befindlichen Artikel zu vermeiden.

Zweckmäßigerweise werden die Transportaufträge von der Materialflusssteuerung an diejenigen Transportfahrzeuge vergeben, die unter Berücksichtigung der Anfahrzeit und der Transportzeit die kürzeste Gesamtzeit zur Ausführung des Transportauftrags benötigen. Die ausgewählten bzw. beauftragten Transportfahrzeuge können daher wahlweise aus einem Lagerregal des Speichersystems (z.B. Zentrallager, dezentrales Lager) oder von einer beliebigen Position des Schienennetzes starten. Als Anfahrzeit wird insbesondere die Zeit bezeichnet, die das Transportfahrzeug benötigt, um die angeforderte Transporteinheit aus dem Zentrallager oder dem dezentralen Lager bzw. aus einem der Übergabeeinrichtung optional zugeordneten Speicher abzuholen. Im Pufferspeicher oder an jeder anderen Position auf dem Schienensystem sind die Transporteinheiten ja bereits auf dem Transportfahrzeug angeordnet, weshalb die Anfahrzeit null beträgt. Es fällt lediglich eine Transportzeit an. Diese Ausführung des Verfahrens optimiert den Materialfluss innerhalb des Speicher- und Transportsystems.

Das erfindungsgemäße Verfahren wird optional dadurch weitergebildet, dass mit einem einzigen Transportauftrag zwei Unteraufträge abgewickelt werden, indem eine volle Transporteinheit vom Transportfahrzeug an die Übergabeeinrichtung und anschließend eine leere Transporteinheit von der Übergabeeinrichtung an dasselbe Transportfahrzeug übergeben wird, oder umgekehrt. Einfach ausgedrückt können z.B. Fahrzeiten ohne Artikel/Material, also so genannte Leerfahrten, durch das Zusammenfassen von Transportaufträgen minimiert werden, wodurch die Transport- und/oder Wartezeiten noch weiter reduziert werden.

Vorzugsweise wird der Ladungsträger nach dem Abnehmen des Ladegutträgers vertikal nach unten oder oben in eine zweite, unterhalb der Transportebene liegende Übergabeebene transportiert, um einen Ladegutträger mit verändertem Füllstand aufzunehmen, wobei der Ladegutträger mit dem veränderten Füllstand an den Ladungsträger übergeben und die dadurch wiederhergestellte Transporteinheit dann vertikal nach oben in die Transportebene transportiert wird, in der die Transporteinheit an ein zuvor bei der Materialflusssteuerung angefordertes und bereitgestelltes Transportfahrzeug übergeben wird. Damit wird das Prinzip des "Doppelauftrages" unterstützt, indem die Anzahl der Leerfahrten reduziert wird. Der gerade durch die Abnahme des Ladegutträgers frei gewordene Ladungsträger kann unmittelbar, nämlich an derselben Übergabeeinrichtung wieder mit einer Transporteinheit bestückt und zum Transportfahrzeug gebracht werden, was mit maximal reduzierter Transportstrecke realisiert werden kann, um den Materialfluss zu optimieren.

Eine zweckmäßige Weiterbildung ist dadurch gekennzeichnet, dass das Zentrallager und/oder jedes dezentrale Lager und/oder jeder Pufferspeicher von einem Lagerverwaltungssystem gesteuert bzw. verwaltet wird. Anders ausgedrückt steuert das Lagerverwaltungssystem (kurz LVS) basierend auf den Planungsdaten eines übergeordneten Produktionsplanungssystems (kurz PPS) über ein Netzwerk, das das Produktionsplanungssystem mit dem Lagerverwaltungssystem sowie mit den Produktionsstationen verbindet, die Produktionsstationen und den Lagerbestand. Dazu steht das Lagerverwaltungssystem mit der Materialflusssteuerung optional in Verbindung. Mit einem solchen Verfahrensablauf wird eine optimale Abwicklung der durch die Materialanforderung in Schritt a) ausgelösten Transportaufträge erreicht.

Vorteilhafterweise verfahren innerhalb des Speicher- und Transportsystems freie Transportfahrzeuge und mit vollen oder leeren Transporteinheiten belegte Transportfahrzeuge, um einerseits volle oder leere Transporteinheiten zu einer Übergabeeinrichtung zu liefern und andererseits im Füllstand veränderte Transporteinheiten von einer Übergabeeinrichtung abzuholen. Durch die permanente Bereitstellung sowohl freier als auch belegter Transportfahrzeuge innerhalb des Speicher- und Transportsystems können die Transportstrecken bzw. die Transportzeiten optimiert werden.

Das Verfahren eignet sich besonders gut für das Handling von Schragen als Ladegutträger. Das Verfahren wird daher optional dadurch weitergebildet, dass mindestens eine Übergabeeinrichtung, die einem Schragenfüller zugeordnet ist, der wiederum einem Maker, nämlich einer Filterherstellungsmaschine oder einer Zigarettenherstellungsmaschine zugeordnet ist, Leerschragen als Ladegutträger zur Aufnahme stabförmiger Artikel anfordert, wobei die Leerschragen zusammen mit dem Ladungsträger in die untere Übergabeebene transportiert, dort vom Ladungsträger abgenommen und zum Schragenfüller transportiert sowie an diesen übergeben werden.

Vorteilhafterweise werden die vom Schragenfüller befüllten Schragen zurück an die Übergabeeinrichtung übergeben und von dieser auf einen angeforderten Ladungsträger übergeben, der wahlweise bereits an der Übergabeeinrichtung bereitsteht oder von einem Transportfahrzeug angeliefert wird, wobei die aus Ladungsträger und Schragen gebildeten vollen Transporteinheiten aus der Übergabeebene nach oben in die Transportebene transportiert und dort an das angeforderte Transportfahrzeug übergeben werden, so dass die volle Transporteinheit zur weiteren Verwendung in das Speicher- und Transportsystem eingeschleust wird. Das Einlagern der vollen Schragen ist am Beispiel von Filtern wichtig, damit die Filter während der Lagerungszeit aushärten können.

Das Verfahren wird optional auch dadurch weitergebildet, dass mindestens eine Übergabeeinrichtung, die einem Schragenentleerer zugeordnet ist, der wiederum einem Maker, nämlich einer Filteransetzmaschine oder einer Packmaschine oder einer Multisegmentfilterherstellungsmaschine zugeordnet ist, Vollschragen als Ladegutträger mit stabförmigen Artikeln anfordert, wobei die Vollschragen zusammen mit dem Ladungsträger in die untere Übergabeebene transportiert, dort vom Ladungsträger abgenommen und zum Schragenentleerer transportiert sowie an diesen übergeben werden.

Vorteilhafterweise werden die vom Schragenentleerer entleerten Schragen zurück an die Übergabeeinrichtung übergeben und von dieser auf einen angeforderten Ladungsträger übergeben, der wahlweise bereits an der Übergabeeinrichtung bereitsteht oder von einem Transportfahrzeug angeliefert wird, wobei die aus Ladungsträger und Schragen gebildeten leeren Transporteinheiten aus der Übergabeebene nach oben in die Transportebene transportiert und dort an das angeforderte Transportfahrzeug übergeben werden, so dass die leere Transporteinheit zur weiteren Verwendung in das Speicher- und Transportsystem eingeschleust wird.

Bevorzugt wird eine dem Ladungsträger zugeordnete Schutzhaube vor dem Transport in die Übergabeebene vom Ladungsträger abgenommen und nach dem Transport zurück in die Transportebene auf den Ladungsträger aufgesetzt. Die Schutzhaube schützt die zu transportierenden Artikel. Das Abnehmen der Schutzhaube ermöglicht das Entleeren bzw. Befüllen der Schrägen. Das Aufsetzen stellt sicher, dass die im Schragen befindlichen Artikel geschützt sind.

Mit den im Zusammenhang mit der Handhabung von Schragen genannten Verfahrensschritten wird das Entkoppeln der einzelnen Produktionsstationen voneinander erreicht, also insbesondere das Trennen von Maker und Packer, und ermöglicht den bedarfsgerechten und flexiblen sowie örtlich und zeitlich veränderbaren Materialfluss zwischen den Produktionsstationen. Anders ausgedrückt kann jede Produktionsstation unabhängig von anderen Produktionsstationen zunächst in das Speicher- und Transportsystem produzieren, während sich andere Produktionsstationen unabhängig von anderen Produktionsstationen aus dem Speicher- und Transportsystem mit dem notwendigen Material versorgen können. Durch den optimierten Materialfluss können verbesserte Produktionskapazitäten der einzelnen Produktionsstationen mit unterschiedlichen Produktionsgeschwindigkeiten erreicht werden. Der Nutzungsgrad der Produktionsstationen wird durch den permanenten und unterbrechungsfreien Betrieb erhöht. Selbst der Ausfall einzelner Produktionsstationen kann kompensiert werden. Es können mit dem erfindungsgemäßen Verfahren auch Artikel, beispielsweise Zigaretten, "auf Lager" produziert werden, so dass die Anzahl der Markenwechsel und die aus Markenwechsel resultierenden Wartezeiten reduziert werden können.

Besonders vorteilhaft ist es, wenn mindestens eine Übergabeeinrichtung, die einem Bobinenautomaten zugeordnet ist, der wiederum einem Maker, nämlich einer Filterherstellungsmaschine oder einer Zigarettenherstellungsmaschine oder einer Packmaschine oder einer Folieneinschlagmaschine, zugeordnet ist, einen Ladungsträger mit einem mindestens eine Bobine tragenden Ladegutträger anfordert, wobei der mindestens eine Bobine tragende Ladegutträger zusammen mit dem Ladungsträger in die untere Übergabeebene transportiert, dort vom Ladungsträger abgenommen und zum Maker transportiert sowie an diesen übergeben wird, wobei der ladegutträgerfreie Ladungsträger anschließend aus der Übergabeebene nach oben in die Transportebene transportiert und dort an das angeforderte Transportfahrzeug übergeben werden, so dass der leere Ladungsträger zur weiteren Verwendung in das Speicher- und Transportsystem eingeschleust wird. Mit diesem optionalen Verfahrensschritt kann neben den stabförmigen Artikeln, also z.B. den Filtern oder den Zigaretten, auch das für die Herstellung der genannten Artikel notwendige Material, wie z.B. Umhüllungspapier für die Filterherstellung, Zigarettenpapier und/oder Belagpapier für die Zigarettenherstellung, sowie Verpackungsmaterial für das Verpacken, aus dem Speicher- und Transportsystem an Übergabeeinrichtungen ohne Eingriff einer Bedienperson transportiert werden. Mit anderen Worten ist die Versorgung/Entsorgung völlig autark und der Materialfluss somit optimiert.

Optional kann mindestens eine Übergabeeinrichtung einen Ladungsträger mit einem Ersatz- und/oder Verschleißteile aufnehmenden Ladegutträger anfordern, wobei der die Ersatz- und/oder Verschleißteile tragende Ladegutträger zusammen mit dem Ladungsträger in die untere Übergabeebene transportiert und dort vom Ladungsträger abgenommen wird, wobei der Ladungsträger mit leerem oder ohne Ladegutträger anschließend aus der Übergabeebene nach oben in die Transportebene transportiert und dort an das angeforderte Transportfahrzeug übergeben werden, so dass der freie Ladungsträger bzw. der leere Ladegutträger zur weiteren Verwendung in das Speicher- und Transportsystem eingeschleust wird. Ersatz- und/oder Verschleißteile werden auch als Produktionshilfsmittel bezeichnet, ebenso wie solche Materialien, die zur Herstellung der stabförmigen Artikel sowie deren Verpackung beitragen, also insbesondere auch Verbrauchsmaterialien wie z.B. Leim. Als Verschleiß- und/oder Ersatzteile der Produktionsstationen sind z.B. Saugbänder oder Messer zu nennen, sowie weitere nicht auf Bobinen gewickelte Verpackungsmaterialien wie z.B. Zuschnitte für Zigarettenpackungen, Coupons, Steuermarken und Kartons. Damit wird das Verfahren noch unabhängiger vom Eingriff von Bedienpersonen, da der Materialfluss vollständig und automatisch gesteuert erfolgt, was zudem die Fehleranfälligkeit reduziert. Der erfindungsgemäße Verfahrensschritt unterstützt des Weiteren ein "aufgeräumtes" Umfeld an den einzelnen Produktionsstationen durch die Speicherung im Zentralspeicher, im dezentralen Speicher, im Pufferspeicher oder im Transportsystem, da die Zuführung der angeforderten Materialien nur im Bedarfsfall erfolgt. Des Weiteren wird nur die benötigte Materialmenge zu der Übergabeeinrichtung transportiert, was den Umfang der Rücklieferungsmengen z.B. bei einem Markenwechsel reduziert. Mit diesem erfindungsgemäßen Verfahren können alle Übergabeeinrichtungen, auch solche, die manuellen Arbeitsplätzen oder Verteilzentren zugeordnet sind, mit sämtlichen zum Herstellen und Verpacken sowie zur Aufrechterhaltung des Produktionsbetriebs notwendigen Produktionshilfsmittel in einem gemeinsamen Speicher- und Transportsystem gehandhabt werden, was den gesamten Materialfluss zeit- und wegoptimiert.

Vorteilhafterweise wird das Versorgen der Übergabeeinrichtung mit den Ersatz- und/oder Verschleißteilen durch eine Bedienperson oder einen in der Materialflusssteuerung hinterlegten Wartungsplan oder Bedarfsplan ausgelöst. Insbesondere mit der Auslösung der Versorgung durch den in der Materialflusssteuerung hinterlegten Wartungsplan wird ein kontinuierlicher Produktionsbetrieb durch den optimierten Materialfluss aufrechterhalten.

Vorzugsweise wird ein freier Ladungsträger von einer Übergabeeinrichtung angefordert, um einen mit Restmaterial versehenen Ladegutträger abzuholen. Dadurch, dass die Möglichkeit einer automatischen Rücklieferung von Restmaterial geschaffen ist, beispielsweise bei einem Markenwechsel oder bei Produktionsende, werden die Materialien effizienter verbraucht und insbesondere der Ausschuss reduziert. Insbesondere nicht vollständig verbrauchte Bobinen können dadurch zurück in das Speicher- und Transportsystem geführt werden.

Das Verfahren ist dadurch vorteilhaft weitergebildet, indem die vollen bzw. bestückten sowie leeren Ladegutträger im Zentrallager, dezentralen Lager, Pufferspeicher, auf dem Schienennetz oder direkt in der Übergabeeinrichtung mit oder ohne Ladungsträger sowie mit oder ohne Transportfahrzeug gespeichert werden. Dadurch, dass quasi überall Ladegutträger zur Erledigung eines Transportauftrags zur Verfügung stehen können, selbst auf Transportfahrzeugen, die gerade einen anderen Transportauftrag ausführen, ist eine maximal kurze Transportstrecke bzw. Transportzeit teilweise sogar ohne Anfahrzeit erreichbar, wodurch der Materialfluss optimiert wird. Dadurch können für alle Anforderungen jeweils optional die am günstigsten gelegenen Ladegutträger zu der jeweils den Transportauftrag auslösenden Position, vorzugsweise die Übergabeeinrichtungen und die Pufferspeicher, zum Liefern des angeforderten Ladegutträgers ausgewählt und angesteuert werden, um den Transportauftrag auszuführen.

Zweckmäßigerweise werden die Transportfahrzeuge und/oder die Ladungsträger und/oder die Ladegutträger und/oder das zu transportierende Material durch maschinell lesbare und/oder elektronische Kennzeichnungsträger lokalisiert und/oder verfolgt. Dies erleichtert die Produktverfolgung im Speicher- und Transportsystem sowie in den daran angeschlossenen Übergabeeinrichtungen und Produktionsstationen. Über die Produktverfolgung ist der jeweilige Aufenthaltsort aller Transportfahrzeuge und/oder Ladungsträger und/oder Ladegutträger und/oder der darin transportierten Materialien feststellbar. Des Weiteren ist die Bewegungshistorie nachvollziehbar, so dass z.B. für die Weiterverarbeitung ungeeignete Materialien sowie fehlerhafte Materialien erkannt und ausgeschleust werden.

Vorteilhafterweise erfolgt das Lokalisieren und/oder Verfolgen über ein Satellitennavigationssystem und wenigstens einen Innenraumübertrager. Durch das Satellitennavigationssystem und den so genannten "Indoor Transmitter" kann eine exakte und schnelle Produktverfolgung gewährleistet werden.

Das Verfahren wird optional dadurch weitergebildet, dass Leerschragen nahe dem Schragenentleerer und/oder unmittelbar vor dem Zuführen an den Schragenfüller vollständig entleert und/oder gesäubert werden. Diesen Schritt kann man auch als Konformisieren von Leerschragen bezeichnen. Ein Leerschragen wird als unkonform bezeichnet, wenn dieser vor dem Zuführen zu einem Schragenfüller nicht vollständig leer ist. Jeder Schragen wird daher vor dem Zuführen entleert und/oder gesäubert, um eine unerwünschte Vermischung von Artikeln in den Schragen zu vermeiden.

Vorzugsweise werden die Vollschragen nach dem Befüllen im Schragenfüller im Bereich zwischen dem Schragenfüller und der Übergabeeinrichtung auf Konformität geprüft und solche Vollschragen, die als nicht konform erkannt werden, werden an dem Einschleusen in das Speicher- und Transportsystem gehindert. Dieser auch als Konformisierung von Vollschragen bezeichnete Verfahrensschritt umfasst z.B. das Überprüfen des Füllniveaus sowie des Füllbildes, das Überwachen auf so genannte Querflieger und vorstehende Artikel, sowie der Sortenreinheit, des Verschmutzungs- und Beschädigungsgrads der Artikel sowie der Schragen selbst. Diese manuell oder automatisch ausführbare Konformitätsprüfung führt im Falle einer festgestellten Unkonformität zum Unterbinden der Zuführung des Schragens in das Speicher- und Transportsystem.

Eine bevorzugte Weiterbildung ist dadurch gekennzeichnet, dass die Bobinen bei der Übergabe mittels einer Übergabeeinrichtung aus dem Speichersystem an das Transportsystem auf ihre Konformität geprüft werden, und solche Bobinen, die nicht als konform erkannt werden, an dem Einschleusen in das Transportsystem gehindert werden. Eine Bobine wird als unkonform bezeichnet, wenn z.B. der Zustand des Bobinenschlosses kritisch oder die Bobine teleskopiert ist.

Vorzugsweise werden die Ladegutträger und insbesondere die mit stabförmigen Artikeln gefüllten Vollschragen vor dem Einlagern in das Speichersystem und nach dem Auslagern aus dem Speichersystem gewogen. Dadurch lässt sich am Beispiel von Zigaretten im Vollschragen der Trocknungsgrad erkennen. Die Zigaretten verlieren während der Lagerung Feuchtigkeit. Liegen die Zigaretten längere Zeit, beispielsweise mehr als 24h in einem Speicher, ist die Feuchtigkeit so gering, einhergehend mit einem signifikanten Gewichtsverlust, dass eine Weiterverarbeitung unterbunden wird.

Dazu wird zweckmäßigerweise eine Gewichtsdifferenz ermittelt, die bei Überschreiten eines oberen Grenzwertes und bei Unterschreiten eines unteren Grenzwertes das Ausschleusen der Ladegutträger aus dem Speicher- und Transportsystem über eine Übergabeeinrichtung auslöst.

Eine vorteilhafte Weiterbildung des Verfahrens zeichnet sich dadurch aus, dass volle, also mit Material versehene Ladegutträger nach vorgegebenen Kriterien und/oder stichprobenartig direkt aus dem Speicher- und Transportsystem in eine Qualitätssicherungsstation übergeben werden. Die direkte Kopplung einer Qualitätssicherungsstation an das Speicher- und Transportsystem oder über eine Übergabeeinrichtung ermöglicht während des Produktionsbetriebs eine Kontrolle. Über die Zuordnung und Produktverfolgung sowie deren Bewegungshistorie lassen sich Rückschlüsse auf die Produktionsstation ziehen, so dass aus den Ergebnissen der Qualitätssicherung kurzfristig die entsprechenden Konsequenzen, beispielsweise eine Nachstellung der Maschinenparameter der Produktionsstation oder sogar die Stilllegung der Produktionsstation, gezogen werden können.

Weitere zweckmäßige und/oder vorteilhafte Merkmale und Weiterbildungen ergeben sich aus den Unteransprüchen und der Beschreibung. Das erfindungsgemäße Verfahrensprinzip wird anhand der beigefügten Zeichnung näher erläutert. In der Zeichnung zeigt:
- Fig. 1: eine schematische Übersicht eines intralogistischen Systems, das in der Tabak verarbeitenden Industrie zum Einsatz kommt,
- Fig. 2: einen schematischen Ablaufplan für einen Transportauftrag,
- Fig. 3: einen schematischen Ablaufplan für eine Übergabeeinrichtung,
- Fig. 4: eine schematische Darstellung der Netzwerkanbindung innerhalb des Systems,

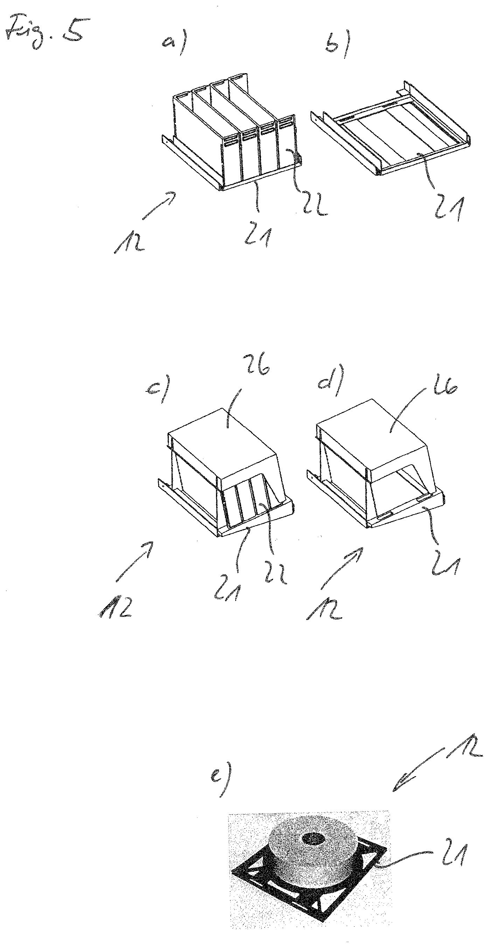

- Fig. 5 a) bis e): schematische Darstellungen von Transporteinheiten,
- Fig. 6: eine schematische Darstellung eines Transportfahrzeugs, und
- Fig. 7: eine schematische Darstellung des Bereichs einer Übergabeeinrichtung.

In der Zeichnung wird das erfindungsgemäße Verfahren beispielhaft anhand eines intralogistischen Systems der Tabak verarbeitenden Industrie erläutert. Die Erfindung bezieht sich jedoch ausdrücklich auch auf Verfahren anderer Bereiche, in denen mehrere Produktionsstationen, also z.B. Herstellungsmaschinen, Packmaschinen etc. mit einem Speicher- und Transportsystem in Form eines Materialaustausches miteinander kommunizieren. Des Weiteren werden in der Zeichnung nur beispielhafte Abläufe, beispielsweise zur Handhabung von Schragen innerhalb der Zigarettenindustrie erläutert. Weitere nicht dargestellte Abläufe, beispielsweise zur Handhabung von Bobinen oder dergleichen sind jedoch ebenfalls von der Erfindung abgedeckt.

Das erfindungsgemäße Verfahren beschreibt - vorzugsweise für ein intralogistisches System 10 in der Zigaretten- und/oder Filterstabproduktion - die bedarfsgesteuerte Versorgung und Entsorgung mindestens zweier Produktionsstationen 11 der Tabak verarbeitenden Industrie mit vollen und/oder leeren Transporteinheiten 12, die mittels selbstfahrenden Transportfahrzeugen 30 innerhalb eines Speicher- und Transportsystems, das als Überkopf-System mit einem mindestens ein Lagerregal umfassenden Zentrallager 13 als Speichersystem 14 und einem zum Transportsystem 15 gehörenden Schienennetz 16, an das jede Produktionsstation 11 angeschlossen ist, ausgebildet ist, schienengebunden zur Versorgung an jede Produktionsstation 11 heran und zur Entsorgung von jeder Produktionsstation 11 weg verfahren werden.

Dieses Verfahren ist durch die folgenden Schritte gekennzeichnet: a) Anfordern einer vollen oder leeren Transporteinheit 12, die innerhalb des Speicher- und Transportsystems 14, 15 zur Verfügung steht, durch eine Übergabeeinrichtung 17, die ein Bindeglied zwischen dem Speicher- und Transportsystem 14, 15 und der zugehörigen Produktionsstation 11 bildet, bei einer Materialflusssteuerung 18, b) Vergeben eines Transportauftrags durch die Materialflusssteuerung 18 an ein Transportfahrzeug 30 mit der angeforderten vollen oder leeren Transporteinheit 12, c) Verfahren des Transportfahrzeugs 30 mit der vollen oder leeren Transporteinheit 12 in der Transportebene auf dem Schienennetz 16 von der Startposition des Transportfahrzeugs 30 bis an die den Transportauftrag auslösende Übergabeeinrichtung 17 einer Produktionsstation 11, die in einer Produktionsebene unterhalb der Transportebene liegt, heran, d) Übergeben der vollen oder leeren Transporteinheit 12 vom Transportfahrzeug 30 an die Übergabeeinrichtung 17 an einer Übergabeposition, e) Absenken der vollen oder leeren Transporteinheit 12 aus der Transportebene in eine unterhalb der Transportebene liegende Übergabeebene mittels einer Liftanordnung, wobei die Schritte d) und e) auch in umgekehrter Reihenfolge ausgeführt werden können und das Transportfahrzeug 30 nach dem Übergeben der vollen oder leeren Transporteinheit 12 an die Übergabeeinrichtung 17 für einen nächsten Transportauftrag freigegeben wird.

Das erfindungsgemäße Verfahren zeichnet sich demnach dadurch aus, dass mehrere Produktionsstationen 11 an ein Speicher- und Transportsystem 14, 15 angeschlossen sind, und jede Produktionsstation 11 über eine Übergabeeinrichtung 17 mit dem Speicher- und Transportsystem 14, 15 in Verbindung steht, so dass unter Fortfall einer manuellen Tätigkeit/eines manuellen Eingreifens Transporteinheiten 12 mit und ohne Material zwischen dem Speicher- und Transportsystem 14, 15 und den Produktionsstationen 11 sowie zwischen Produktionsstationen 11 via Speicher- und Transportsystem 14, 15 untereinander geliefert und abgeholt werden können. Die eingebundenen Produktionsstationen 11 können Herstellungsmaschinen, Packmaschinen oder auch manuelle Arbeits- oder Verteilplätze sein. Entscheidend ist, dass der gesamte Materialfluss, der neben den Filterstäben, Zigaretten, anderen stabförmigen Artikeln etc. sowie sonstigen zur Herstellung der Artikel der Tabak verarbeitenden Industrie notwendigen Materialien und Produkte ausdrücklich auch zum Transport der vorgenannten Artikel, Materialien und Produkte notwendige Komponenten einschließt, über die Materialflusssteuerung gesteuert, koordiniert und überwacht wird.

Die im Folgenden beschriebenen Verfahrensschritte und Weiterbildungen stellen für sich betrachtet oder in Kombination miteinander bevorzugte Ausführungsformen der Erfindung dar. Es wird ausdrücklich darauf hingewiesen, dass Verfahrensschritte, die in den Ansprüchen und/oder der Figurenbeschreibung zusammengefasst sind, auch funktional eigenständig das weiter oben beschriebene Verfahren weiterbilden können.

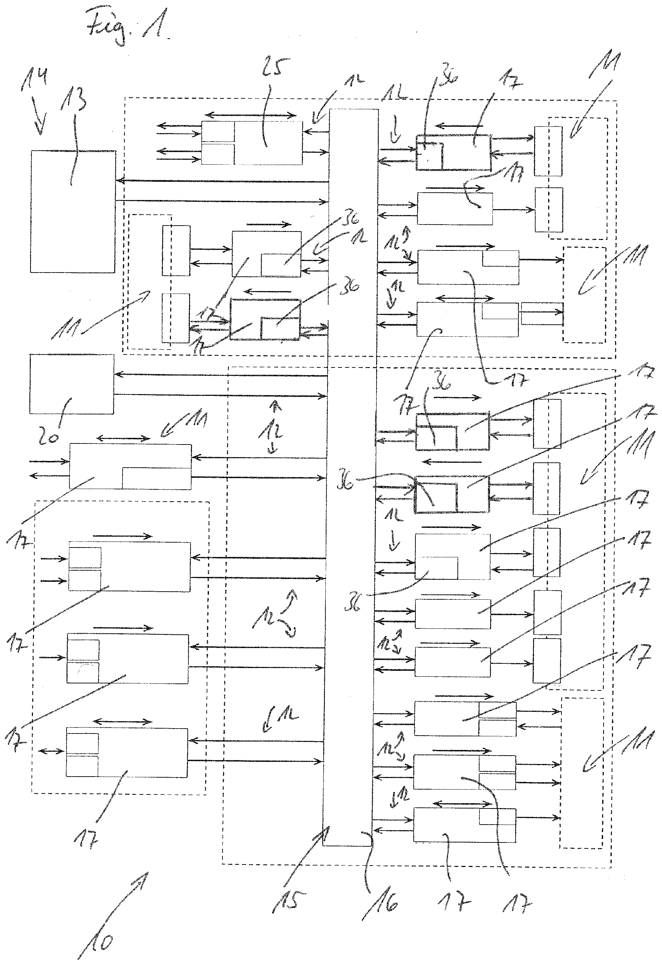

In der Figur 1 sind nahezu sämtliche möglichen Optionen in einer Darstellung zusammengefasst. Das erfindungsgemäße Verfahren kann aber auch nur Teile des Systems 10 umfassen, beispielsweise, wenn nur Maker oder ausschließlich Packmaschinen mit dem Speicher- und Transportsystem 14, 15 gekoppelt sind.

Das Speicher- und Transportsystem 14, 15 ist als Überkopf-System ausgebildet, was bedeutet, dass die Transportebene vom Boden gelöst oberhalb der Bodenebene, in der bzw. auf der die Produktionsstationen 11 angeordnet sind, verläuft. Das Speichersystem 14 selbst umfasst das Zentrallager 13 mit mindestens einem Lagerregal, wobei jedes Lagerregal mit einer skalierbaren Anzahl von Regalen versehen ist, deren Lagerflächen in horizontalen Regalebenen und vertikalen Regalreihen angeordnet sind. Die einzelnen Regale sind mit Abstand zueinander aufgestellt, so dass in den Gassen zwischen den Regalen die Einlagerung und Auslagerung von Transporteinheiten 12 mittels der Transportfahrzeuge 30 erfolgen kann. In jeder Gasse können gleichzeitig mehrere Transportfahrzeuge 30 - auch in unterschiedlichen Regalebenen - verfahren werden. Die Transportfahrzeuge 30 fahren von den Stirnseiten in die Gassen. An einer Seite jeder Gasse oder an beiden Seiten jeder Gasse befindet sich eine Liftanordnung, um die Transportfahrzeuge 30 zwischen den Regalebenen hin und her fahren zu lassen sowie um die Transportfahrzeuge 30 letztlich in die Transportebene zu bringen.

Das Transportsystem 15 liegt in der Transportebene und umfasst das Schienennetz 16. Auf dem Schienennetz 16 sind die Transportfahrzeuge 30 selbständig verfahrbar. Die selbstfahrenden Transportfahrzeuge 30 selbst sind zur Aufnahme und Abgabe der Transporteinheiten 12 oberhalb der Schienenebene ausgebildet und eingerichtet. Im Bereich des Schienennetzes 16 sind zusätzlich zum Zentrallager 13 Pufferspeicher ausgebildet. Des Weiteren können dem Transportsystem 15 bzw. dem Schienennetz 16 neben dem Zentrallager 13 weitere Zwischenspeicher zugeordnet sein. Diese mindestens ein Lagerregal aufweisenden, dezentralen Lager 20 gehören ebenfalls zum Speichersystem 14. Zusätzlich zu den Übergabeeinrichtungen 17 können auch die Pufferspeicher und/oder die Zwischenspeicher volle und/oder leere Transporteinheiten 12 bei der Materialflusssteuerung 18 anfordern. Mittels der Transportfahrzeuge 30 werden dann auch die Pufferspeicher und/oder Zwischenspeicher beliefert. Letztlich können auch zuvor definierte Abschnitte des Schienennetzes 16 als Zwischenspeicher oder Pufferspeicher dienen und entsprechend Transportaufträge auslösen.

Das Zentrallager 13 und/oder jedes verteilte, also dezentrale Lager 20 werden wegoptimiert nahe den Produktionsstationen 11 angeordnet. Das bedeutet, dass diese Lager möglichst gleiche Streckenlängen zu den am weitest entfernten Zielpunkten haben. Damit werden kurze Transportstrecken bzw. Transportzeiten erreicht. Letztere kann man auch erreichen, indem im Schienennetz 16 Abkürzungen der Transportstrecke, so genannte "Shortcuts" vorgesehen werden. Diese Maßnahmen führen auch dazu, dass die Transportstrecken gleichmäßig ausgelastet und Staus vermieden werden.

Die Transportaufträge können in der Reihenfolge ihrer Prioritäten vergeben werden. Die Priorität kann auf unterschiedliche Weise durch die Materialflusssteuerung 18 ermittelt werden, beispielsweise aus der Dringlichkeit und/oder dem Vorrang eines Materials und/oder dem Vorrang einer Übergabeeinrichtung 17 bzw. Produktionsstation 11 und/oder dem Vorrang eines Pufferspeichers oder eines Zwischenspeichers und/oder dem Vorrang von Produktionsaufträgen. Beispielsweise wird für die Ermittlung der Dringlichkeit die von der Übergabeeinrichtung 17 beim Anfordern in Schritt a) gemeldete Restlaufzeit der Produktionsstation 11 zugrunde gelegt. Die Restlaufzeit berechnet sich z.B. aus der Produktionsgeschwindigkeit der Produktionsstation 11.

Die Transportaufträge können von der Materialflusssteuerung 18 an diejenigen Transportfahrzeuge 30 vergeben werden, die unter Berücksichtigung der Anfahrzeit und der Transportzeit die kürzeste Gesamtzeit zur Ausführung des Transportauftrags 30 benötigen. Dazu können die ausgewählten bzw. beauftragten Transportfahrzeuge 30 wahlweise aus dem Zentrallager 13, dem dezentralen Lager 20, dem Pufferspeicher oder jeder anderen beliebigen Position des Schienennetzes 16 starten. Als Anfahrzeit wird die Zeit gerechnet, die ein leeres Transportfahrzeug 30, also ein Transportfahrzeug 30 ohne Transporteinheit 12, benötigt, um eine Transporteinheit 12 abzuholen bzw. aufzuladen. Sobald das Transportfahrzeug 30 mit der angeforderten Transporteinheit 12 bestückt ist, beginnt die Transportzeit, die mit dem Erreichen der den Transportauftrag auslösenden Übergabeeinrichtung 17 endet. Dadurch wird die Gesamtzeit zur Ausführung des Transportauftrags optimiert. Eine verkürzte Transportzeit kann auch durch die Steuerung der Geschwindigkeit der Transportfahrzeuge 30 erreicht werden, indem diese bei Bedarf nur in kritischen Streckenabschnitten, z.B. Kurven, zeitweise mit reduzierter Geschwindigkeit fahren. Wenn im Schienennetz 16 unterschiedliche Routen zum Zielpunkt existieren, kann die schnellste Route errechnet werden, wobei bei der Ermittlung der schnellsten Route neben der Transportstreckenlänge auch das Verkehrsaufkommen auf dem Schienennetz 16 berücksichtigt wird.

Um Leerfahrten von Transportfahrzeugen 30 möglichst zu minimieren und den Verkehr auf dem Schienennetz 16 zu reduzieren, können mit einem einzigen Transportauftrag zwei Unteraufträge abgewickelt werden, indem eine volle Transporteinheit 12 vom Transportfahrzeug 30 an die Übergabeeinrichtung 17 und anschließend eine leere Transporteinheit 12 von der Übergabeeinrichtung 17 an dasselbe Transportfahrzeug 30 übergeben wird, oder umgekehrt. Es kann sogar sinnvoll sein, die Transportfahrzeuge 30 an der Übergabeeinrichtung 17 warten zu lassen, um nach der Übergabe einer angeforderten Transporteinheit 12 eine entsprechend im Füllstand veränderte Transporteinheit 12 wieder aufzunehmen. Eine weitere Möglichkeit, die Fahrten ohne Material zu minimieren besteht darin, die Transportaufträge in einem Lager (z.B. Zentrallager 13, dezentrales Lager 20) zu starten und dort auch wieder enden zu lassen.

Eine Transporteinheit 12 kann aus einem Ladegutträger 21 bestehen. Vorzugsweise umfasst die Transporteinheit 12 jedoch jeweils einen Ladungsträger 22 sowie den Ladegutträger 21. Als Ladungsträger 22 eignen sich z.B. einfache Tabletts, Materialaufnahmen oder Boxen. Als Ladegutträger 21 sind beispielhaft Schragen (z.B. zur Aufnahme stabförmiger Artikel), Boxen (z.B. für Verbrauchsmaterial oder Produktionshilfsstoffe), Aufnahmeplatten mit oder ohne Aufnahmedorn (z.B. für Bobinen) etc. genannt. Die Ladegutträger 21 sind vorzugsweise an die jeweils zu transportierenden Artikel/Materialien angepasst, so dass diese bevorzugt form- und/oder kraftschlüssig in oder auf dem Ladegutträger 21 liegen. Die Ladungsträger 22 sind auf die Ladegutträger 21 abgestimmt, damit diese sicher auf dem Ladungsträger 22 transportiert werden können und eine einfache Übergabe vom Transportfahrzeug 30 oder an das Transportfahrzeug 30 sichergestellt ist.

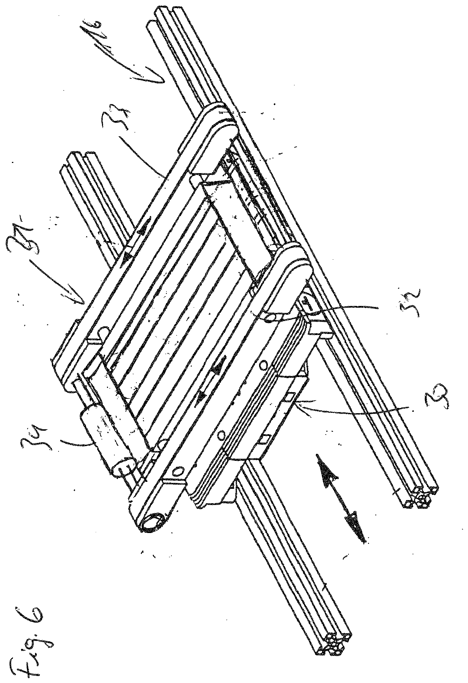

In der Figur 6 ist eine beispielhafte Ausgestaltung eines Transportfahrzeugs 30 dargestellt. Die Transportfahrzeuge 30 sind als Lastenträger ausgebildet und weisen auf der dem Schienennetz 16 abgewandten Oberseite einen Querförderer 31 zum Aufnehmen und Abgeben von Ladungsträger 22 und/oder Ladegutträgern 21 quer zur Fahrtrichtung des Transportfahrzeugs 30 auf. Der Querförderer 31 kann z.B. ein umlaufender Bandförderer sein. Der Querförderer 31 kann z.B. auch zwei beabstandet zueinander angeordnete Förderbänder 32, 33 aufweisen, die über einen gemeinsamen Antrieb 34 synchron antriebbar sind. Andere Ausführungsformen, beispielsweise mit vier Bändern zum gleichzeitigen Querfördern in entgegen gesetzter Richtung sind aber auch möglich.

Nach dem Übergeben der Transporteinheit 12 vom Transportfahrzeug 30 an die Übergabeeinrichtung 17 wird die Transporteinheit 12 mit der Liftanordnung, die wahlweise dem Speicher- und Transportsystem 14, 15 oder bevorzugt der Übergabeeinrichtung 17 zugeordnet ist, vertikal nach unten in eine erste Übergabeebene transportiert. In der unteren Übergabeebene wird der volle oder leere Ladegutträger 21 vom Ladungsträger 22 abgenommen, zu einer Station zum Verändern des Füllstandes der Ladegutträger 21 transportiert und an diese übergeben. Alternativ kann die Transporteinheit 12 auch zunächst mit dem Transportfahrzeug 30 zusammen abgesenkt werden, um dann die Transporteinheit 12 an die Übergabeeinrichtung 17 zu übergeben. Sobald die Übergabeeinrichtung 17 die Transporteinheit 12 übernommen hat und sich die Transporteinheit 12 in der unterhalb der Transportebene liegenden Übergabeebene befindet, wird die Transporteinheit z.B. mittels eines Bandtransports der Station zur Veränderung des Füllstandes zugeführt.

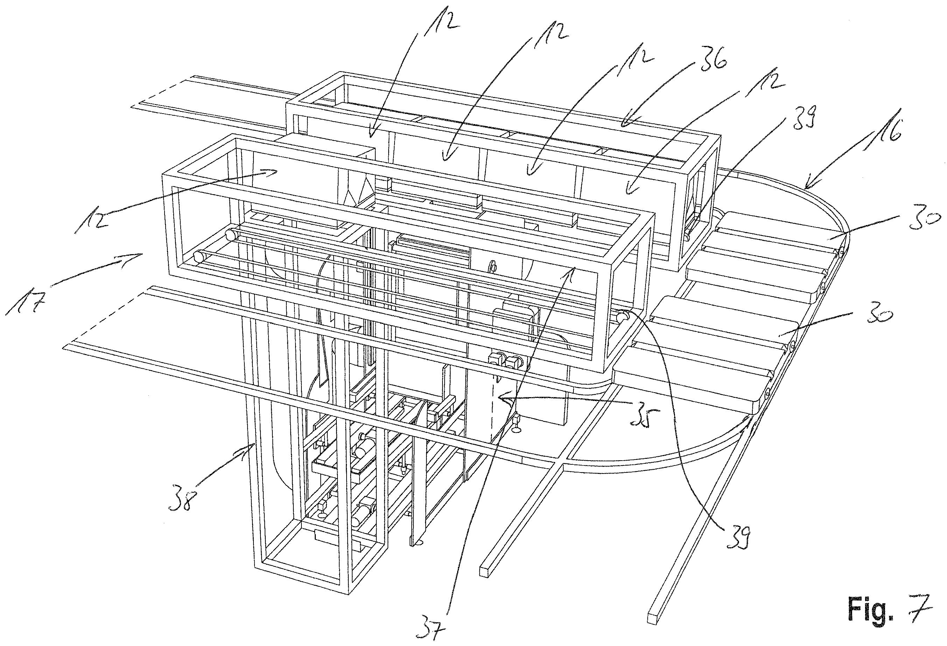

In der Figur 7 ist beispielhaft die Funktionalität der Liftanordnung im Bereich einer Übergabeeinrichtung 17 dargestellt. Die Übergabeeinrichtung 17 verbindet das Schienennetz 16 mit einer Produktionsstation 11, der eine Einrichtung 35 zum Verändern des Füllstandes der Schragen zugeordnet ist. Die Übergabeeinrichtung 17 weist in dem gezeigten Beispiel einen Speicherbereich 36 und einen Übergabebereich 37 auf. Speicherbereich 36 und Übergabebereich 37 sind beabstandet zueinander angeordnet. Der Übergabebereich 37 kann auch Speicherbereich und der Speicherberiech 36 auch Übergabebereich sein. Optional können auch beide Bereiche als Speicherbereich z.B. für Vollschragen bzw. Leerschragen sein. In dem durch den Abstand geschaffenen Zwischenraum ist ein von beiden Seiten zugänglicher Lift 38 angeordnet, mittels dem Schragen von oben nach unten und umgekehrt transportierbar sind. Sowohl der Speicherbereich 36 als auch der Übergabebereich 37 weisen Fördermittel, beispielsweise Förderbänder 39, auf, die zum Transport der Ladungsträger 22 und/oder der Lagegutträger 21 vom Schienennetz 16 bzw. dem darauf fahrenden Transportfahrzeug 30 in den Speicherbereich 36 hinein und aus dem Übergabebereich 37 heraus an das Schienennetz 16 bzw. dem darauf fahrenden Transportfahrzeug 30 ausgebildet und eingerichtet sind. Des Weiteren sind Mittel vorgesehen, mit denen die Ladungsträger 22 und/oder Ladegutträger 21 (in der Transportebene) aus dem Speicherbereich 36 in den Lift 38 und aus dem Lift 38 in den Übergabebereich 37 transportierbar sind. Entsprechend können Mittel vorgesehen sein, mit denen die Ladungsträger 22 und/oder Ladegutträger 21 (in der unteren Übergabeebene) aus dem Lift 38 an die Einrichtung 35 oder zurück transportierbar sind.

Nach dem Abnehmen des Ladegutträgers 21 vom Ladungsträger 22 wird der Ladungsträger 22 entweder mit dem Lift 38 wieder vertikal nach oben in die Transportebene transportiert, um ihn über den Übergabebereich 37 an ein bereitstehendes Transportfahrzeug 30 abzugeben, oder vertikal nach oben oder unten in eine zweite, ebenfalls unterhalb der Transportebene liegende Übergabeebene transportiert, um eine Transporteinheit 12 mit verändertem Füllstand von derselben Übergabeeinrichtung 17 zu übernehmen. Die dadurch wiederhergestellte, vollständige Transporteinheit 12 wird dann vertikal nach oben in die Transportebene transportiert, in der die Transporteinheit 12 an ein zuvor bei der Materialflusssteuerung angefordertes und bereitgestelltes Transportfahrzeug 30 übergeben wird.

Das Zentrallager 13 und/oder jedes verteilte oder dezentrale Lager 20 und/oder jeder Pufferspeicher werden von einem Lagerverwaltungssystem (LVS) 23 gesteuert bzw. verwaltet. Das Programm, das vorzugsweise der Materialflusssteuerung 18 zugeordnet ist, steuert u.a. die Lagerplatzzuweisung für die Transporteinheiten 12, die Ein- und Auslagerungsvorgänge sowie die Bestandsführung. Damit ist z.B. auch auf einfache Weise eine Inventur durchführbar. Einzelne Lagerbereiche, z.B. solche für Filterstäbe oder Zigaretten oder Bobinen oder andere Produktionshilfsmittel, können unabhängig voneinander verwaltet werden. Weitere Vorteile des LVS 23 bestehen darin, die Überwachung der Lagerdauer z.B. von Filterstäben oder Zigaretten, eine Sperrung überalterter Bestände, Sicherstellung des FiFo-Prinzips sowie die Protokollierung der Bewegungen innerhalb des Speicher- und Transportsystems 14, 15 auszuführen. Das LVS 23 bietet außerdem eine Schnittstelle zu einem Produktionsplanungssystem (PPS) 24 zur vorzugsweise bestandsbasierten Produktionsplanung.

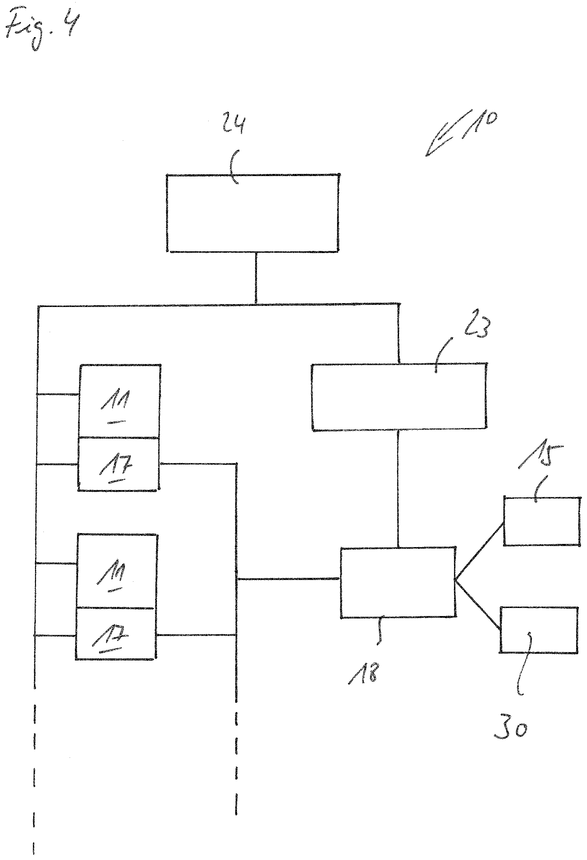

Zur Erreichung einer bedarfsgerechten Materialversorgung der Produktionsstationen 11 über das System 10 sind alle Übergabeeinrichtungen 17 mit der Materialflusssteuerung 18 vernetzt. Optional ist ein weiteres Netzwerk vorgesehen, mit dem die Steuerung der Produktionsstationen 11 und der Lagerbestände im Speichersystem 14 ermöglicht wird. Dieses PPS 24 ist mit allen Produktionsstationen 11 und dem LVS 23 vernetzt. Das LVS 23 wiederum steht mit der Materialflusssteuerung 18 in Netzwerkverbindung. Die Materialflusssteuerung 18 wiederum steuert das Transportsystem 15 und die darauf verfahrbaren Transportfahrzeuge 30. Durch das PPS 24 werden - basierend auf individuellen Planungsdaten - einzelne Produktionsaufträge für die Produktionsstationen 11 geplant und an die Produktionsstationen 11 und die Übergabeeinrichtungen 17 vergeben. Ein Produktionsauftrag beschreibt dabei die Art und Menge der an einer Produktionsstation 11 herzustellenden Artikel/Produkte. Damit sind alle Daten der Artikel/Produkte und Materialien, die mit dem intralogistischen System 10 zu- und abgeführt werden müssen, bekannt. Über das Netzwerk bzw. deren Datenverbindungen werden die Datensätze elektronisch an das Speicher- und Transportsystem 14, 15 sowie an die Übergabeeinrichtungen 17 übertragen. Die Übergabeeinrichtungen 17 erstellen daraus Materialanforderungen an das Transportsystem 15 für die passenden Transporteinheiten 12, die von der Materialflusssteuerung 18 in konkrete Transportaufträge umgesetzt werden. Das in der Figur 4 schematisch angedeutete System 10 ist durch weitere Produktionsstationen 11 mit zugehöriger Übergabeeinrichtung 17 erweiterbar. Das intralogistische System 10 ist dadurch individuell an unterschiedliche Leistungsfähigkeiten anpassbar bzw. erweiterbar.

Innerhalb des Speicher- und Transportsystems 14, 15 fahren freie Transportfahrzeuge 30 und mit vollen oder leeren Transporteinheiten 12 belegte Transportfahrzeuge 30, um einerseits volle oder leere Transporteinheiten 12 zu einer Übergabeeinrichtung 17 zu liefern und andererseits im Füllstand veränderte Transporteinheiten 12 von einer Übergabeeinrichtung 17 abzuholen. Dazu verlassen die Transportfahrzeuge 30 das Schienennetz 16 nicht. Es besteht allerdings auch die Möglichkeit, dass die Transportfahrzeuge 30 allein oder zusammen mit einer Transporteinheit 12 vom Schienennetz 16 an die Übergabeeinrichtung 17 und zurück übergeben werden, wenn z.B. ein Ausschleusen einer Transporteinheit 12 aus einem ersten intralogistisches System 10 der Zigaretten- und/oder Filterstabproduktion und ein Einschleusen in ein zweites intralogistisches System 10 der Zigaretten- und/oder Filterstabproduktion erzielt werden soll.

Das zuvor zunächst allgemein beschriebene Verfahrensprinzip wird im Folgenden für einen beispielhaften, konkreten Produktions- bzw. Transportauftrag und anhand von Übergabeeinrichtungen 17 mit konkreten Transporteinheiten 12 beschrieben.

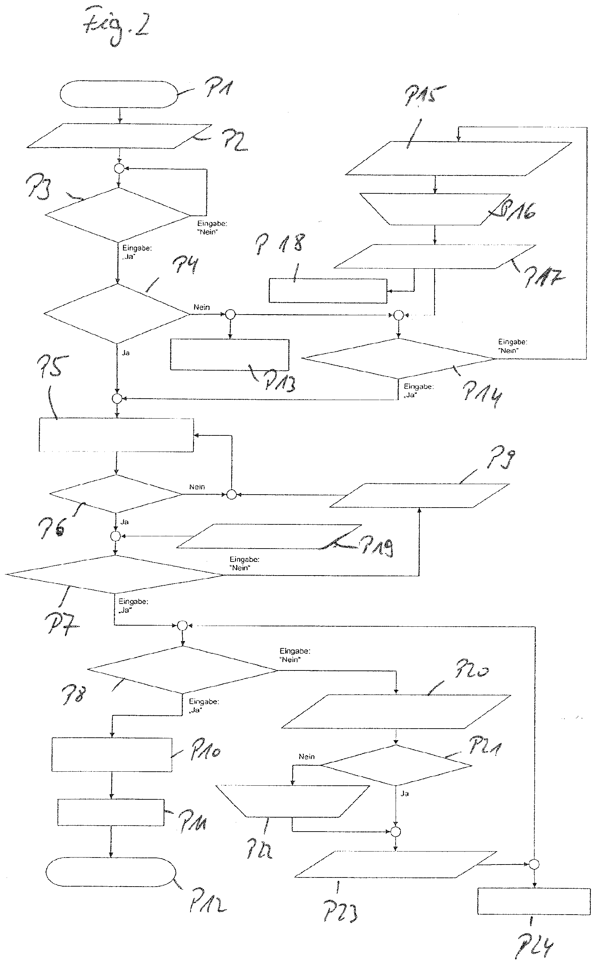

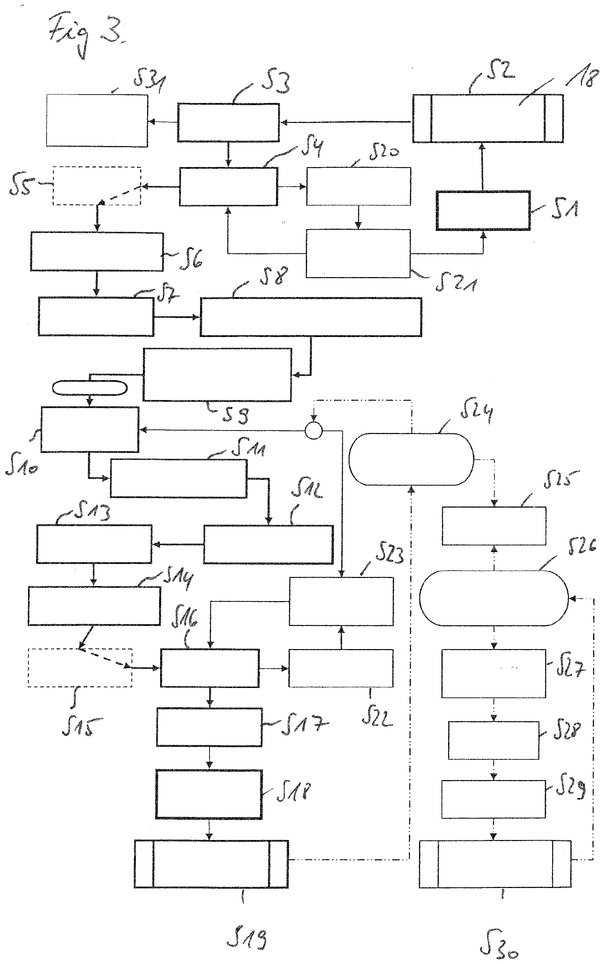

Beispielsweise werden bei der Herstellung von Filterstäben und Zigaretten kundenseitig so genannte Produktionsaufträge gesteuert. Ein Produktionsauftrag beschreibt Art und Menge der mit den Produktionsstationen 11 herzustellenden Artikel. Solche Produktionsaufträge werden mit einer Vielzahl von Transportaufträgen abgewickelt. Am Beispiel einer Übergabeeinrichtung 17 für einen Schragenfüller erfolgt bei der Ausgangssituation vorheriger Produktionsauftrag ist beendet, Vollschragenstation ist leer, Leerschragen auf Leerschragenstation sind möglich, keine Transporteinheiten 12 mit Vollschragen im Speicher der Übergabeeinrichtung 17 vorhanden und Transporteinheiten 12 mit Leerschragen im Speicher der Übergabeeinrichtung 17 sind möglich, beispielhaft folgender Ablauf gemäß Figur 2: Nach z.B. manueller Eingabe eines Produktionsauftrags (siehe Schritt P1) wird ein Produktionsauftrag angelegt (siehe Schritt P2). Nach einer Abfrage, ob tatsächlich gestartet werden soll (siehe Schritt P3), wird ein Produktionsauftrag gestartet. Dann wird zunächst der Typ Leerschragen geprüft (siehe Schritt P4). Bei Änderung des Typs Leerschragen werden die Leerschragenstation und der Speicher der Übergabeeinrichtung 17 leergefahren und die passenden Leerschragen angefordert. Wenn die passenden Leerschragen bereitstehen, wird der Produktionsauftrag ausgeführt, nämlich es werden Leerschragen angeliefert und Vollschragen abgeholt (siehe Schritt P5). Das detaillierte Ausführen eines Transportauftrags an einer einem Schragenfüller zugeordneten Übergabeeinrichtung 17 wird weiter unten anhand der Figur 3 näher erläutert.

Ist die Produktionsmenge erreicht (Abfrage siehe Schritt P6) oder soll der Produktionsauftrag abgebrochen werden, wird abgefragt, ob der Produktionsauftrag tatsächlich beendet werden soll (siehe Schritt P7). Wenn dies bejaht wird, wird des Weiteren abgefragt, ob die Vollschragenstation leer ist (siehe Schritt P8). Falls erforderlich oder gewünscht, also wenn der Produktionsauftrag fortgesetzt werden soll, kann die geforderte Restmenge eingegeben und der Produktionsauftrag erneut gestartet werden (siehe Schritt P9). Nach Beendigung des Produktionsauftrages, wenn also die Produktionsmenge erreicht ist, werden die Vollschragen aus dem Speicher der Übergabeeinrichtung 17 abgeholt und an Transportfahrzeuge 30 übergeben, die die Vollschragen abtransportieren (siehe Schritt P10), beispielsweise in das Zentrallager 13. Nach dem Kennzeichnen des Endes des Produktionsauftrages (siehe Schritt P11) ist der Produktionsauftrag abgeschlossen (Schritt P12).

In der Figur 2 sind weitere Verfahrensschritte angedeutet, die optional ausgeführt werden können. Ausgehend vom Schritt P4 kann für den Fall, dass noch kein Produktionsauftrag ausgeführt werden soll, auch der Schritt P13 folgen, mit dem ein Schragenwechsel eingeleitet werden kann, indem bei abweichendem Schragentyp Leerschragen des ersten Typs abgeholt und zum Lager transportiert werden. Wenn in der Abfrage "Leerschragenstation leer?" (Schritt P14) festgestellt wird, dass diese leer ist, kann mit Schritt P5 fortgefahren werden. Für den Fall, dass die Leerschragenstation nicht leer ist, wird mit einer entsprechenden Eingabe zum Schritt P15 mit der Meldung "Leerschragen-Block zur Abholung auf Vollschragenstation bereitstellen" übergeleitet. Ein solcher Leerschragenblock, beispielsweise ein 4-er Block, wird dann bereitgestellt (Schritt P16). Das Bereitstellen wird quittiert (Schritt P17). Der Leerschragenblock kann dann abgeholt und zum Lager transportiert werden (Schritt P18) oder über den Schritt P14 zum Produktionsauftrag (Schritt P5) führen.

Soll ein Produktionsauftrag abgebrochen werden, muss dieser Schritt P19 vor dem Beenden des Produktionsauftrags (Schritt P7) eingegeben bzw. ausgeführt werden. Wenn die Abfrage bezüglich der Vollschragenstation (Schritt P8) negativ ausfällt, wenn also die Vollschragenstation noch nicht leer ist, erfolgt die Meldung "Block zur Abholung auf Vollschragenstation bereitstellen" in Schritt P20. Wird die Abfrage "Blöcke auf Vollschragenstation?" (Schritt P21) bejaht, wird die Bereitstellung quittiert (Schritt P23). Wenn die Abfrage verneint wird, wird die Vollschragenstation mit Leerschragen aufgefüllt (Schritt P22) und dann quittiert (Schritt P23). Abschließend werden die Vollschragen abgeholt und gelagert (Schritt P24).

Im Folgenden wird das Handling im Schritt P5 von Schragen, also Transportbehältern für stabförmige Artikel, wie z.B. Filterstäbe oder Zigaretten, innerhalb des intralogistischen Systems 10 bzw. an der Übergabeeinrichtung 17 insbesondere mit Bezug auf die Figur 3 beschrieben. Mindestens eine Übergabeeinrichtung 17, die einem Schragenfüller als Vorrichtung zum Ändern des Füllstandes zugeordnet ist, der wiederum einem Maker, nämlich einer Filterherstellungsmaschine oder einer Zigarettenherstellungsmaschine zugeordnet ist, fordert Leerschragen als Ladegutträger 21 zur Aufnahme stabförmiger Artikel an (siehe Schritt S1). Diese sind entweder bereits auf einem Transportfahrzeug 30 verfügbar oder ein Transportfahrzeug 30 holt und übernimmt die angeforderten Leerschragen aus dem Speichersystem 14. Die Leerschragen können einzeln oder als Block von mehreren zusammengestellten Leerschragen gehandhabt werden. Das Transportfahrzeug 30 transportiert den oder die Leerschragen an die Übergabeeinrichtung 17 (siehe Schritt S2) und übergibt den Ladungsträger 22 mit dem Leerschragen oder den Leerschragen an die Übergabeeinrichtung 17 (siehe Schritt S3). Anschließend werden die Transporteinheiten 12 zur Liftanordnung transportiert (siehe Schritt S4). Die Schragen, also auch die Leerschragen können zum Schutz der darin zu transportierenden Artikel mit einer Schutzhaube 26 oder dergleichen versehen sein. Die dadurch erreichte Kapselung der Leerschragen dient (nach dem Befüllen) als Aromaschutz und als Schutz gegen das Austrocknen von Artikeln.

Für den Fall, dass die Leerschragen mit einer solchen Schutzhaube 26 abgedeckt sind, wird die Schutzhaube 26 von der Transporteinheit 12 getrennt (siehe Schritt S5). Anschließend werden die Leerschragen zusammen mit dem Ladungsträger 22 durch die Liftanordnung in die untere Übergabeebene transportiert (siehe Schritt S6). Für den Fall, dass keine Schutzhaube 26 vorgesehen ist, werden die Leerschragen direkt nach der Übernahme in die untere Übergabeebene transportiert, dort vom Ladungsträger 22 abgenommen (siehe Schritt S7) und zum Schragenfüller transportiert (siehe Schritt S8) sowie an diesen bzw. die zu dem Schragenfüller zuführende Bandstation übergeben (siehe Schritt S9).

Vorzugsweise werden vom Schragenfüller befüllte Schragen dann als Vollschragen von der vom Schragenfüller abführenden Bandstation an die Übergabeeinrichtung 17 übergeben und von dieser auf einen angeforderten Ladungsträger 22 übergeben. Dazu werden die Ladungsträger 22 vertikal nach oben oder unten z.B. mittels der Liftanordnung zu der abführenden Bandstation verfahren (siehe Schritt S10). Dieser Ladungsträger 22 kann bereits an der Übergabeeinrichtung 17 bereitstehen oder von einem Transportfahrzeug 30 angeliefert werden. Wenn ein Vollschragen oder mehrere zu einem Block zusammengestellte Vollschragen vom Schragenfüller übernommen (siehe Schritt S11), zum Ladungsträger 22 transportiert (siehe Schritt S12) sowie auf dem Ladungsträger 22 abgesetzt wurden (siehe Schritt S13), kann optional die Neigung der Vollschragen geändert werden, um das Herausfallen der Artikel zu verhindern. Die aus dem Ladungsträger 22 und den Vollschragen gebildeten vollen Transporteinheiten 12 werden durch die Liftanordnung vertikal nach oben in die Transportebene transportiert (siehe Schritt S14) und dort an das angeforderte Transportfahrzeug 30 übergeben. Optional kann vor dem Übergeben an das Transportfahrzeug 30 wiederum eine Schutzhaube 26 zugeführt werden (siehe Schritt S15), um die in den (Voll-)Schragen befindlichen Artikel zu schützen. Nach dem Aufwärtstransport durch die Liftanordnung werden die Transporteinheiten 12 in die Übergabeposition transportiert (siehe Schritt S16) und dort zur Übergabe an ein zuvor angefordertes Transportfahrzeug 30 bereitgestellt (siehe Schritt S17). Sowohl die Leerschragen beim Zuführen zur Übergabeeinrichtung 17 als auch die Vollschragen beim Abführen aus der Übergabeeinrichtung 17 können entweder direkt verwendet bzw. weitergegeben werden. Optional können die Leerschragen und/oder Vollschragen auch an der Übergabeeinrichtung 17 zwischengespeichert werden.

Entsprechend wird auch verfahren, wenn mindestens eine Übergabeeinrichtung 17, die einem Schragenentleerer als Vorrichtung zum Verändern des Füllstandes zugeordnet ist, der wiederum einem Maker, nämlich einer Filteransetzmaschine oder einer Packmaschine oder einer Multisegmentfilterherstellungsmaschine zugeordnet ist, Vollschragen als Ladegutträger 21 anfordert (siehe Schritt S1). Diese sind entweder bereits auf einem Transportfahrzeug 30 verfügbar oder ein Transportfahrzeug 30 holt und übernimmt die angeforderten Vollschragen aus dem Speichersystem 14. Die Vollschragen können einzeln oder als Block von mehreren zusammengestellten Vollschragen gehandhabt werden. Das Transportfahrzeug 30 transportiert den oder die Vollschragen an die Übergabeeinrichtung 17 (siehe Schritt S2) und übergibt den Ladungsträger 22 mit dem Vollschragen oder den Vollschragen an die Übergabeeinrichtung 17 (siehe Schritt S3). Anschließend werden die Transporteinheiten 12 zur Liftanordnung transportiert (siehe Schritt S4). Die Schragen, also insbesondere auch die Vollschragen können zum Schutz der darin zu transportierenden Artikel mit einer Schutzhaube 26 oder dergleichen versehen sein. Die dadurch erreichte Kapselung der Vollschragen dient (nach dem Befüllen) z.B. als Aromaschutz oder als Schutz gegen das Austrocknen von Artikeln.

Für den Fall, dass die Vollschragen mit einer solchen Schutzhaube 26 abgedeckt sind, wird die Schutzhaube 26 von der Transporteinheit 12 getrennt (siehe Schritt S5). Anschließend werden die Vollschragen zusammen mit dem Ladungsträger 22 durch die Liftanordnung in die untere Übergabeebene transportiert (siehe Schritt S6). Für den Fall, dass keine Schutzhaube 26 vorgesehen ist, werden die Vollschragen direkt nach der Übernahme in die untere Übergabeebene transportiert, dort vom Ladungsträger 22 abgenommen (siehe Schritt S7) und zum Schragenentleerer transportiert (siehe Schritt S8) sowie an diesen bzw. die zu dem Schragenentleerer zuführende Bandstation übergeben (siehe Schritt S9).

Vorzugsweise werden vom Schragenentleerer entleerte Schragen dann als Leerschragen von der vom Schragenentleerer abführenden Bandstation an die Übergabeeinrichtung 17 übergeben und von dieser auf einen angeforderten Ladungsträger 22 übergeben. Dazu werden die Ladungsträger 22 vertikal nach oben oder unten z.B. mittels der Liftanordnung zu der abführenden Bandstation verfahren (siehe Schritt S10). Dieser Ladungsträger 22 kann bereits an der Übergabeeinrichtung 17 bereitstehen oder von einem Transportfahrzeug 30 angeliefert werden. Ein Leerschragen oder mehrere zu einem Block zusammengestellte Leerschragen werden vom Schragenentleerer übernommen (siehe Schritt S11), zum Ladungsträger 22 transportiert (siehe Schritt S12) sowie auf dem Ladungsträger 22 abgesetzt (siehe Schritt S13). Die aus dem Ladungsträger 22 und den Leerschragen gebildeten leeren Transporteinheiten 12 werden durch die Liftanordnung vertikal nach oben in die Transportebene transportiert (siehe Schritt S14) und dort an das angeforderte Transportfahrzeug 30 übergeben. Optional kann vor dem Übergeben an das Transportfahrzeug 30 wiederum eine Schutzhaube 26 zugeführt werden (siehe Schritt S15), um die Leerschragen für einen nächsten Transportauftrag vorzubereiten. Nach dem Aufwärtstransport durch die Liftanordnung werden die Transporteinheiten 12 in die Übergabeposition transportiert (siehe Schritt S16) und dort zur Übergabe an ein zuvor angefordertes Transportfahrzeug 30 bereitgestellt (siehe Schritt S17). Sowohl die Vollschragen beim Zuführen zur Übergabeeinrichtung 17 als auch die Leerschragen beim Abführen aus der Übergabeeinrichtung 17 können entweder direkt verwendet bzw. weitergegeben werden. Optional können die Vollschragen und/oder Leerschragen auch an der Übergabeeinrichtung 17 zwischengespeichert werden.

Am Beispiel der Figur 3 werden weitere mögliche Verfahrensschritte beschrieben. Die Transporteinheiten 12 mit Vollschragen oder Leerschragen können nach der Übernahme von der Übergabeeinrichtung 17 (Schritt S3/S4) gespeichert (Schritt S20) oder wieder aus dem Speicher entnommen (Schritt S21) werden. Nachdem die Transporteinheiten 12 im Schritt S17 bereitgestellt wurden, kann eine Abholung angefordert werden (Schritt S18). Mit der Abholung (Schritt S19) der Transporteinheiten 12 endet das beispielhafte Handling von Vollschragen oder Leerschragen. Am Ende eines so genannten Produktionsauftrags kann das System Leergefahren werden (Schritt S24). Dazu können leere bzw. freie Transportfahrzeuge 30 angefordert werden (Schritt S25).

Am Anfang eines Produktionsauftrags können Leerschragen oder Vollschragen abgeholt werden (Schritt S26). Dazu werden Transporteinheiten 12 mit Vollschragen oder Leerschragen aus dem Speicher entnommen (Schritt S27), transportiert (Schritt S28), bereitbestellt (Schritt S29) und anschließend abgeholt (Schritt S30). Nach der Übernahme der Transporteinheit 12 von der Übergabeeinrichtung 17 (Schritt S3) kann die Lieferung von Vollschragen oder Leerschragen noch bestätigt werden (Schritt S31).

Neben den Schragen können auch Bobinen innerhalb des intralogistischen Systems 10 automatisch gehandhabt werden. Dazu ist mindestens eine Übergabeeinrichtung 17 einem Bobinenautomaten zugeordnet, der wiederum einem Maker, nämlich einer Filterherstellungsmaschine oder einer Zigarettenherstellungsmaschine oder einer Packmaschine zugeordnet ist. Diese Übergabeeinrichtung 17 fordert einen Ladungsträger 22 mit einem mindestens eine Bobine tragenden Ladegutträger 21 an. Alternativ kann die oder jede Bobine auch direkt auf dem Ladungsträger 22 liegen. Nach dem Übernehmen der Transporteinheit 12 einschließlich der Bobine oder des Bobinenstapels durch die Übergabeeinrichtung 17 wird die Transporteinheit 12 in die untere Übergabeebene transportiert, dort vom Ladungsträger 22 abgenommen und zum Maker transportiert sowie an diesen übergeben. Der ladegutträgerfreie Ladungsträger 22 wird anschließend aus der Übergabeebene nach oben in die Transportebene transportiert und dort an das angeforderte Transportfahrzeug 30 übergeben, so dass der leere Ladungsträger 22 zur weiteren Verwendung in das Speicher- und Transportsystem 14, 15 eingeschleust wird.

Alternativ kann der Ladungsträger 22 mit der Bobine oder dem Bobinenstapel vom Transportfahrzeug 30 abgenommen und an die Übergabeeinrichtung 17 übergeben werden. Die oder jede Bobine kann dann gegriffen und vom Ladungsträger 22 abgehoben werden, so dass der dann freie Ladungsträger zurück an das Transportfahrzeug 30 übergeben wird. Die oder jede Bobine wird dann ohne Ladungsträger 22 vertikal nach unten aus der Transportebene in die Übergabeebene transportiert, beispielsweise direkt in den Speicherbereich des Bobinenautomaten. Ein umgekehrter Ablauf ist z.B. möglich, wenn nicht verwendete Bobinen, beispielsweise bei einem Markenwechsel, zurück in das Speicher- und Transportsystem 14, 15 eingeschleust werden. Dazu wird ein freier Ladungsträger 22 von der Übergabeeinrichtung 17 angefordert.

Des Weiteren können auch Ersatz- und/oder Verschleißteile als Produktionshilfsmittel, zu denen insbesondere so genannte "Non Tobacco Materials" (kurz NTM) wie z.B. Leim, Saugbänder oder Messer als Verschleiß- und/oder Ersatzteile der Produktionsstationen sowie weitere nicht auf Bobinen gewickelte Verpackungsmaterialien wie z.B. Zuschnitte gehören, innerhalb des intralogistischen Systems 10 automatisch gehandhabt werden. Dazu fordert mindestens eine Übergabeeinrichtung 17 einen Ladungsträger 22 mit einem Produktionshilfsmittel aufnehmenden Ladegutträger 21, z.B. einer Box, an, wobei der die Produktionshilfsmittel tragende Ladegutträger 21 zusammen mit dem Ladungsträger 22 - alternativ auch ohne diesen - nach dem Übergeben an die Übergabeeinrichtung 17 in die untere Übergabeebene transportiert und dort vom Ladungsträger 22 abgenommen wird. Der Ladungsträger 22 mit leerem oder ohne Ladegutträger 21 wird anschließend aus der Übergabeebene vertikal nach oben in die Transportebene transportiert und dort an das angeforderte Transportfahrzeug 30 übergeben, so dass der freie Ladungsträger 22 bzw. der leere Ladegutträger 21 zur weiteren Verwendung in das Speicher- und Transportsystem 14, 15 eingeschleust wird. Die Ersatz- und/oder Verschleißteile sowie alle anderen Produktionshilfsmittel können aus einem separaten Speicher, der an das Speichersystem 14 angeschlossen ist oder aus dem Zentrallager 13 bzw. dezentralen Lager 20 abgeholt werden. Restbestände sowie Austauschteile können auch in umgekehrter Richtung transportiert werden. Dazu wird ein freier Ladungsträger 22 von der Übergabeeinrichtung 17 angefordert. Das Versorgen bzw. Anfordern der Ersatz- und/oder Verschleißteile kann durch eine Bedienperson an den Produktionsstationen 11 oder durch in der Materialflusssteuerung 18 hinterlegte Arbeits- oder Wartungspläne ausgelöst werden. Dabei können z.B. vorbestimmte Wechselzyklen hinterlegt sein. Optional kann der Bedarf an Ersatz- und/oder Verschleißteilen sowie den Produktionshilfsmitteln auch on-line bestimmt bzw. ermittelt und entsprechend gemeldet werden.

Hinter den Übergabeeinrichtungen 17 können anstelle der Maker und Packer auch manuelle Arbeitsplätze vorgesehen sein, wobei die Übergabeeinrichtungen 17 die Transporteinheiten 12 dann an einen Übergabeplatz für das manuelle Handling transportieren. Entsprechend können Transporteinheiten 12 am Übergabeplatz auch wieder in die Übergabeeinrichtung 17 manuell eingeschleust werden. Des Weiteren besteht die Möglichkeit, die Transporteinheiten 12 mittels der Übergabeeinrichtung 17 einem Schragenwagen oder anderen mobilen Einheiten zur Aufnahme und zum Transport bzw. Verteilen von Transporteinheiten 12 zuzuführen.

Das intralogistische System 10 beinhaltet optional auch eine Produktverfolgung. Die Transportfahrzeuge 30 und/oder die Ladungsträger 22 und/oder die Ladegutträger 21 und/oder das zu transportierende Material werden durch maschinell lesbare und/oder elektronische Kennzeichnungsträger lokalisiert und/oder verfolgt. Die Transportfahrzeuge 30 können auch mit einem Satellitennavigationssystem, beispielsweise dem Global Positioning System (GPS), innerhalb des Transportsystems 15 navigiert werden, wobei in diesem Fall ein System von mindestens einem, vorzugsweise jedoch mehreren Innenraumübertragern ("Indoor Transmitter") verwendet wird.

Die Produktverfolgung erstrecket sich nicht nur auf das Speicher- und Transportsystem 14, 15 sondern auch auf die Übergabeeinrichtungen 17 sowie die sich daran anschließenden Komponenten und Bereiche. Beispielsweise können die Ladegutträger 21 (z.B. die Schrägen) oder die Ladungsträger 22 sowie Materialien (z.B. Bobinen) mit so genannten RFID-Tags, Barcodes oder anderen elektronisch lesbaren Labels versehen sein. Mit entsprechenden Erkennungs- bzw. Lesegeräten, die an ausgewählten Positionen platziert sind, kann die Nachverfolgbarkeit aller Bewegungen im intralogistischen System 10 sichergestellt werden. Die Produktverfolgung ermöglicht auch das chargenweise Zuordnen von Ausgangsmaterialien zu Endprodukten sowie der verpackten Endprodukte zu den einzelnen Produktionsstationen 11, was auch das Einführen qualitätssichernder Maßnahmen erleichtert. Des Weiteren können durch die Produktverfolgung auch Falschlieferungen ausgeschlossen bzw. erkannt werden sowie nicht zur Weiterverarbeitung geeignete Materialien ausgeschleust werden.

Erreicht wird die Produktverfolgung z.B. durch eine Protokollierung aller Materialbewegungen im Speicher- und Transportsystem 14, 15 sowie der daran angeschlossenen Komponenten und Bereiche. Die Transporteinheiten 12 können bei jeder Beladung und Entladung eines Transportfahrzeugs 30 überprüft werden. Wird ein Fehler festgestellt, kann der Materialfluss nach individuellen Kriterien gesteuert werden. Beispielsweise werden die Leerschragen am Schragenfüller zunächst geprüft und die Vollschragen nach dem Befüllen mit Produktionsdaten auf maschinell lesbaren Kennzeichnungsträgern gekennzeichnet. Am Schragenentleerer werden die Leerschragen gekennzeichnet und die Vollschragen bzw. deren Produktionsdaten überprüft. Bei einem weiteren Beispiel, das für sich oder in Kombination mit vorgenannten Beispielen ausgeführt werden kann, werden Bobinen beim Zuführen in das Transportsystem 15 und/oder beim Abführen z.B. von der Übergabeeinrichtung 17 an den Bobinenautomaten anhand maschinell lesbarer Kennzeichnungsträger überprüft.

Leerschragen können nahe dem Schragenentleerer und/oder unmittelbar vor dem Zuführen an den Schragenfüller vollständig geleert und/oder gesäubert werden. Dieses Verfahren wird als Konformisieren von Leerschragen bezeichnet. Durch das Leeren und/oder Säubern wird sichergestellt, dass die Leerschragen auch tatsächlich leer sind, bevor sie befüllt werden. Das Säubern kann z.B. mit Bürsten erfolgen. Andere Reinigungsverfahren, wie z.B. das Auspusten etc., sind aber ebenfalls einsetzbar. Die beim Reinigen/Säubern anfallenden Verunreinigungen können aufgefangen und abgefördert werden.

Das Konformisieren von Vollschragen erfolgt, indem jeder Vollschragen nach dem Befüllen manuell oder mit automatischen Mitteln auf Konformität geprüft wird. Es wird beispielsweise das Füllniveau gemessen oder das Füllbild überprüft. Wenn die Prüfung ergibt, dass der überprüfte Vollschragen die vorgegebenen Kriterien nicht erfüllt, wird eine Meldung an die Materialflusssteuerung 18 ausgegeben und die Zuführung des Vollschragens in das Speicher- und Transportsystem 14, 15 wird verhindert.

Entsprechendes kann für die Bobinen durchgeführt werden. Die Bobinen werden ebenfalls bei der Übergabe mittels einer Übergabeeinrichtung 17 aus dem Speichersystem 14 an das Transportsystem 15 manuell oder automatisch auf ihre Konformität geprüft. Solche Bobinen, die nicht als konform erkannt werden, werden am Einschleusen in das Transportsystem 15 gehindert. Stellt z.B. eine Einrichtung zur automatischen Überwachung der Bobinen fest, dass diese nicht konform, nämlich z.B. teleskopiert ist, gibt die Einrichtung eine Meldung an die Materialflusssteuerung 18.

Eine weitere Option für das erfindungsgemäße Verfahren besteht darin, dass Transporteinheiten 12 und insbesondere Ladegutträger 21, nämlich mit stabförmigen Artikeln gefüllte Vollschragen, vor dem Einlagern in das Speichersystem und nach dem Auslagern aus dem Speichersystem gewogen werden. Das Wiegen kann auch direkt nach der Befüllung der Vollschragen und unmittelbar vor der Entleerung erfolgen. Aus den Gewichtsmessungen für ein und denselben Vollschragen wird eine Gewichtsdifferenz ermittelt und protokolliert. Wird ein oberer Grenzwert überschritten oder ein unterer Grenzwert unterschritten, wird das Ausschleusen der Ladegutträger 21 aus dem Speicher- und Transportsystem 14, 15 über eine Übergabeeinrichtung 17 ausgelöst. Beispielsweise wird ein mit Zigaretten gefüllter Vollschragen beim Einlagern in das Speichersystem 14 gewogen. Nach einer Lagerzeit von mehreren Stunden, in den die Zigaretten austrocknen und dadurch Gewicht verlieren, wird dieser Vollschragen beim Auslagern erneut gewogen. Wird eine große Gewichtsdifferenz, also ein starkes Austrocknen, ermittelt, wird dieser Vollschragen für die Weiterverarbeitung gesperrt und ggf. ausgeschleust. Die Messmittel, also Waagen, können an unterschiedlichen Positionen des intralogistischen Systems 10 angeordnet sein.

Des Weiteren können volle, also mit Material versehene Ladegutträger 21 direkt aus dem Speicher- und Transportsystem 14, 15 in eine Qualitätssicherungsstation (QS-Station) 25 übergeben werden. Das Ausschleusen zu Prüfzwecken erfolgt nach vorgegebenen Kriterien und/oder stichprobenartig. Die Transporteinheiten 12 bzw. die Ladegutträger 21 können direkt an einem zentralen Übergabepunkt vom Transportsystem 15 an die QS-Station 25 oder mittels einer Übergabeeinrichtung 17 an diese übergeben werden. Vorzugsweise betrifft die Qualitätssicherung die Überprüfung von Filtern und Zigaretten. Es sind jedoch optional alle zur Verarbeitung und Produktion relevanten Materialien, also insbesondere auch Bobinen sowie die weiter oben genannten Produktionshilfsmittel in der QS-Station 25 überprüfbar.

## Patentansprüche

1. Verfahren zur bedarfsgesteuerten Versorgung und Entsorgung mindestens zweier Produktionsstationen (11) der Tabak verarbeitenden Industrie mit vollen und/oder leeren Transporteinheiten (12), die mittels selbstfahrenden Transportfahrzeugen (30) innerhalb eines Speicher- und Transportsystems, das als Überkopf-System mit einem mindestens ein Lagerregal umfassenden Zentrallager (13) als Speichersystem (14) und einem zum Transportsystem (15) gehörenden Schienennetz (16), an das jede Produktionsstation (11) angeschlossen ist, ausgebildet ist, schienengebunden zur Versorgung an jede Produktionsstation (11) heran und zur Entsorgung von jeder Produktionsstation (11) weg verfahren werden, **gekennzeichnet durch** folgende Schritte:
a) Anfordern einer vollen oder leeren Transporteinheit (12), die innerhalb des Speicher- und Transportsystems (14, 15) zur Verfügung steht, durch eine Übergabeeinrichtung (17), die ein Bindeglied zwischen dem Speicher- und Transportsystem (14, 15) und der zugehörigen Produktionsstation (11) bildet, bei einer Materialflusssteuerung (18),
b) Vergeben eines Transportauftrags durch die Materialflusssteuerung (18) an ein Transportfahrzeug (30) mit der angeforderten vollen oder leeren Transporteinheit (12),
c) Verfahren des Transportfahrzeugs (30) mit der vollen oder leeren Transporteinheit (12) in der Transportebene auf dem Schienennetz (16) von der Startposition des Transportfahrzeugs (30) bis an die den Transportauftrag auslösende Übergabeeinrichtung (17) einer Produktionsstation (11), die in einer Produktionsebene unterhalb der Transportebene liegt, heran,
d) Übergeben der vollen oder leeren Transporteinheit (12) vom Transportfahrzeug (30) an die Übergabeeinrichtung (17) an einer Übergabeposition,
e) Absenken der vollen oder leeren Transporteinheit (12) aus der Transportebene in eine unterhalb der Transportebene liegende Übergabeebene mittels einer Liftanordnung,
wobei die Schritte d) und e) auch in umgekehrter Reihenfolge ausgeführt werden können und das Transportfahrzeug (30) nach dem Übergeben der vollen oder leeren Transporteinheit (12) an die Übergabeeinrichtung (17) für einen nächsten Transportauftrag freigegeben wird, wobei die vollen oder leeren Transporteinheiten (12), die jeweils aus einem Ladungsträger (22) und einem Ladegutträger (21) gebildet sind, nach dem Übergeben vom Transportfahrzeug (30) an die Übergabeeinrichtung (17) mit der Liftanordnung vertikal nach unten in eine erste Übergabeebene transportiert werden, wobei der volle oder leere Ladegutträger (21) in der unteren Übergabeebene vom Ladungsträger (22) abgenommen, zu einer Station zum Verändern des Füllstandes der Ladegutträger (21) transportiert und an diese übergeben wird.

2. Verfahren nach Anspruch 1, **dadurch gekennzeichnet, dass** zusätzlich zu den Übergabeeinrichtungen (17) auch im Bereich des Schienennetzes (16) ausgebildete Pufferspeicher und/oder dem Transportsystem (15) zugeordnete Zwischenspeicher, die als mindestens ein Lagerregal aufweisendes, dezentrales Lager (20) neben dem Zentrallager (13) zum Speichersystem (14) gehören, volle oder leere Transporteinheiten (12) bei der Materialflusssteuerung (18) anfordern und mittels der Transportfahrzeuge (30) beliefert werden.

3. Verfahren nach Anspruch 2, **dadurch gekennzeichnet, dass** die Transportaufträge in der Reihenfolge ihrer Prioritäten vergeben werden, wobei die Priorität wahlweise aus der Dringlichkeit und/oder dem Vorrang eines Materials und/oder dem Vorrang einer Übergabeeinrichtung (17) bzw. Produktionsstation (11) und/oder dem Vorrang eines Pufferspeichers oder eines Zwischenspeichers und/oder dem Vorrang von Produktionsaufträgen durch die Materialflusssteuerung (18) ermittelt wird.

4. Verfahren nach einem der Ansprüche 1 bis 3, **dadurch gekennzeichnet, dass** die Transportaufträge von der Materialflusssteuerung (18) an diejenigen Transportfahrzeuge (30) vergeben werden, die unter Berücksichtigung der Anfahrzeit und der Transportzeit die kürzeste Gesamtzeit zur Ausführung des Transportauftrags benötigen.

5. Verfahren nach einem der Ansprüche 1 bis 4, **dadurch gekennzeichnet, dass** mit einem einzigen Transportauftrag zwei Unteraufträge abgewickelt werden, indem eine volle Transporteinheit (12) vom Transportfahrzeug (30) an die Übergabeeinrichtung (17) und anschließend eine leere Transporteinheit (12) von der Übergabeeinrichtung (17) an dasselbe Transportfahrzeug (30) übergeben wird, oder umgekehrt.

6. Verfahren nach Anspruch 5, **dadurch gekennzeichnet, dass** der Ladungsträger (22) nach dem Abnehmen des Ladegutträgers (21) vertikal nach unten oder oben in eine zweite, unterhalb der Transportebene liegende Übergabeebene transportiert wird, um einen Ladegutträger (21) mit verändertem Füllstand aufzunehmen, wobei der Ladegutträger (21) mit dem veränderten Füllstand an den Ladungsträger (22) übergeben und die dadurch wiederhergestellte Transporteinheit (12) dann vertikal nach oben in die Transportebene transportiert wird, in der die Transporteinheit (12) an ein zuvor bei der Materialflusssteuerung (18) angefordertes und bereitgestelltes Transportfahrzeug (30) übergeben wird.

7. Verfahren nach einem der Ansprüche 1 bis 6, **dadurch gekennzeichnet, dass** das Zentrallager (13) und/oder jedes dezentrale Lager (20) und/oder jeder Pufferspeicher von einem Lagerverwaltungssystem gesteuert bzw. verwaltet wird.

8. Verfahren nach einem der Ansprüche 1 bis 7, **dadurch gekennzeichnet, dass** innerhalb des Speicher- und Transportsystems (14, 15) freie Transportfahrzeuge (30) und mit vollen oder leeren Transporteinheiten (12) belegte Transportfahrzeuge (30) verfahren, um einerseits volle oder leere Transporteinheiten (12) zu einer Übergabeeinrichtung (17) zu liefern und andererseits im Füllstand veränderte Transporteinheiten (12) von einer Übergabeeinrichtung (17) abzuholen.

9. Verfahren nach einem der Ansprüche 1 bis 8, **dadurch gekennzeichnet, dass** mindestens eine Übergabeeinrichtung (17), die einem Schragenfüller zugeordnet ist, der wiederum einem Maker, nämlich einer Filterherstellungsmaschine oder einer Zigarettenherstellungsmaschine zugeordnet ist, Leerschragen als Ladegutträger (21) zur Aufnahme stabförmiger Artikel anfordert, wobei die Leerschragen zusammen mit dem Ladungsträger (22) in die untere Übergabeebene transportiert, dort vom Ladungsträger (22) abgenommen und zum Schragenfüller transportiert sowie an diesen übergeben werden.

10. Verfahren nach Anspruch 9, **dadurch gekennzeichnet, dass** die vom Schragenfüller befüllten Schragen zurück an die Übergabeeinrichtung (17) übergeben und von dieser auf einen angeforderten Ladungsträger (22) übergeben werden, der wahlweise bereits an der Übergabeeinrichtung (17) bereitsteht oder von einem Transportfahrzeug (30) angeliefert wird, wobei die aus Ladungsträger (22) und Schragen gebildeten vollen Transporteinheiten (12) aus der Übergabeebene nach oben in die Transportebene transportiert und dort an das angeforderte Transportfahrzeug (30) übergeben werden, so dass die volle Transporteinheit (12) zur weiteren Verwendung in das Speicher- und Transportsystem (14, 15) eingeschleust wird.

11. Verfahren nach einem der Ansprüche 1 bis 10, **dadurch gekennzeichnet, dass** mindestens eine Übergabeeinrichtung (17), die einem Schragenentleerer zugeordnet ist, der wiederum einem Maker, nämlich einer Filteransetzmaschine oder einer Packmaschine oder einer Multisegmentfilterherstellungsmaschine zugeordnet ist, Vollschragen als Ladegutträger (21) mit stabförmigen Artikeln anfordert, wobei die Vollschragen zusammen mit dem Ladungsträger (22) in die untere Übergabeebene transportiert, dort vom Ladungsträger (22) abgenommen und zum Schragenentleerer transportiert sowie an diesen übergeben werden.

12. Verfahren nach Anspruch 11, **dadurch gekennzeichnet, dass** die vom Schragenentleerer entleerten Schragen zurück an die Übergabeeinrichtung (17) übergeben und von dieser auf einen angeforderten Ladungsträger (22) übergeben werden, der wahlweise bereits an der Übergabeeinrichtung (17) bereitsteht oder von einem Transportfahrzeug (30) angeliefert wird, wobei die aus Ladungsträger (22) und Schragen gebildeten leeren Transporteinheiten (12) aus der Übergabeebene nach oben in die Transportebene transportiert und dort an das angeforderte Transportfahrzeug (30) übergeben werden, so dass die leere Transporteinheit (12) zur weiteren Verwendung in das Speicher- und Transportsystem (14, 15) eingeschleust wird.

13. Verfahren nach einem der Ansprüche 9 bis 12, **dadurch gekennzeichnet, dass** eine dem Ladungsträger (22) zugeordnete Schutzhaube (26) vor dem Transport in die Übergabeebene vom Ladungsträger (22) abgenommen und nach dem Transport zurück in die Transportebene auf den Ladungsträger (22) aufgesetzt wird.

14. Verfahren nach einem der Ansprüche 1 bis 13, **dadurch gekennzeichnet, dass** mindestens eine Übergabeeinrichtung (17), die einem Bobinenautomaten zugeordnet ist, der wiederum einem Maker, nämlich einer Filterherstellungsmaschine oder einer Zigarettenherstellungsmaschine oder einer Packmaschine oder einer Folieneinschlagmaschine, zugeordnet ist, einen Ladungsträger (22) mit einem mindestens eine Bobine tragenden Ladegutträger (21) anfordert, wobei der mindestens eine Bobine tragende Ladegutträger (21) zusammen mit dem Ladungsträger (22) in die untere Übergabeebene transportiert, dort vom Ladungsträger (22) abgenommen und zum Maker transportiert sowie an diesen übergeben wird, wobei der ladegutträgerfreie Ladungsträger (22) anschließend aus der Übergabeebene nach oben in die Transportebene transportiert und dort an das angeforderte Transportfahrzeug (30) übergeben werden, so dass der leere Ladungsträger (22) zur weiteren Verwendung in das Speicher- und Transportsystem (14, 15) eingeschleust wird.

15. Verfahren nach einem der Ansprüche 1 bis 14, **dadurch gekennzeichnet, dass** mindestens eine Übergabeeinrichtung (17) einen Ladungsträger (22) mit einem Ersatz- und/oder Verschleißteile aufnehmenden Ladegutträger (21) anfordert, wobei der die Ersatz- und/oder Verschleißteile tragende Ladegutträger (21) zusammen mit dem Ladungsträger (22) in die untere Übergabeebene transportiert und dort vom Ladungsträger (22) abgenommen wird, wobei der Ladungsträger (22) mit leerem oder ohne Ladegutträger (21) anschließend aus der Übergabeebene nach oben in die Transportebene transportiert und dort an das angeforderte Transportfahrzeug (30) übergeben werden, so dass der freie Ladungsträger (22) bzw. der leere Ladegutträger (21) zur weiteren Verwendung in das Speicher- und Transportsystem (14, 15) eingeschleust wird.

16. Verfahren nach Anspruch 15, **dadurch gekennzeichnet, dass** das Versorgen der Übergabeeinrichtung (17) mit den Ersatz- und/oder Verschleißteilen durch eine Bedienperson oder einen in der Materialflusssteuerung (18) hinterlegten Wartungsplan oder Bedarfsplan ausgelöst wird.

17. Verfahren nach einem der Ansprüche Anspruch 14 bis 16, **dadurch gekennzeichnet, dass** ein freier Ladungsträger (22) von einer Übergabeeinrichtung (17) angefordert wird, um einen mit Restmaterial versehenen Ladegutträger (21) abzuholen.

18. Verfahren nach einem der Ansprüche 1 bis 17, **dadurch gekennzeichnet, dass** die vollen bzw. bestückten sowie leeren Ladegutträger (21) im Zentrallager (13), dezentralen Lager (20), Pufferspeicher, auf dem Schienennetz (16) oder direkt in der Übergabeeinrichtung (17) mit oder ohne Ladungsträger (22) sowie mit oder ohne Transportfahrzeug (30) gespeichert werden.

19. Verfahren nach einem der Ansprüche 1 bis 18, **dadurch gekennzeichnet, dass** die Transportfahrzeuge (30) und/oder die Ladungsträger (22) und/oder die Ladegutträger (21) und/oder das zu transportierende Material durch maschinell lesbare und/oder elektronische Kennzeichnungsträger lokalisiert und/oder verfolgt werden.

20. Verfahren nach Anspruch 19, **dadurch gekennzeichnet, dass** das Lokalisieren und/oder Verfolgen über ein Satellitennavigationssystem und wenigstens einen Innenraumübertrager erfolgt.

21. Verfahren nach einem der Ansprüche 9 bis 20, **dadurch gekennzeichnet, dass** Leerschragen nahe dem Schragenentleerer und/oder unmittelbar vor dem Zuführen an den Schragenfüller vollständig entleert und/oder gesäubert werden.

22. Verfahren nach einem der Ansprüche 11 bis 21, **dadurch gekennzeichnet, dass** die Vollschragen nach dem Befüllen im Schragenfüller im Bereich zwischen dem Schragenfüller und der Übergabeeinrichtung (17) auf Konformität geprüft werden und solche Vollschragen, die als nicht konform erkannt werden, an dem Einschleusen in das Speicher- und Transportsystem (14, 15) gehindert werden.

23. Verfahren nach einem der Ansprüche 14 bis 22, **dadurch gekennzeichnet, dass** die Bobinen bei der Übergabe mittels einer Übergabeeinrichtung (17) aus dem Speichersystem (14) an das Transportsystem (15) auf ihre Konformität geprüft werden, und solche Bobinen, die nicht als konform erkannt werden, an dem Einschleusen in das Transportsystem (15) gehindert werden.

24. Verfahren nach einem der Ansprüche 1 bis 23, **dadurch gekennzeichnet, dass** die Ladegutträger (21) und insbesondere die mit stabförmigen Artikeln gefüllten Vollschragen vor dem Einlagern in das Speichersystem (14) und nach dem Auslagern aus dem Speichersystem (14) gewogen werden.

25. Verfahren nach Anspruch 24, **dadurch gekennzeichnet, dass** eine Gewichtsdifferenz ermittelt wird, die bei Überschreiten eines oberen Grenzwertes und bei Unterschreiten eines unteren Grenzwertes das Ausschleusen der Ladegutträger (21) aus dem Speicher- und Transportsystem (14, 15) über eine Übergabeeinrichtung (17) auslöst.

26. Verfahren nach einem der Ansprüche 1 bis 25, **dadurch gekennzeichnet, dass** volle, also mit Material versehene Ladegutträger (21) nach vorgegebenen Kriterien und/oder stichprobenartig direkt aus dem Speicher- und Transportsystem (14, 15) in eine Qualitätssicherungsstation (25) übergeben werden.

## Claims

1. Method for the demand-controlled supply to and disposal away from at least two production stations (11) of the tobacco processing industry with full and/or empty transport units (12), said transport units being moved by rail, by means of self-propelled transport vehicles (30) within a storage and transport system which is designed as an overhead system with a central store (13) as a storage system (14) comprising at least one storage shelf and a rail network (16) forming part of the transport system (15), to which each production station (11) is associated for the supply of each production station and for the disposal away from each production station (11), **characterised by** the following steps:
a) requesting a full or empty transport unit (12) which is available within the storage and transport system (14, 15), by a transfer unit (17), which forms a linking member between the storage and transport system (14, 15) and the associated production station (11), with a material flow control (18),
b) assigning a transport task by the material flow control (18) to a transport vehicle (30) with the requested full or empty transport unit (12),
c) moving the transport vehicle (30) with the full or empty transport unit (12) in the transport plane on the rail network (16) from the start position of the transport vehicle (30) as far as the transfer unit (17) of a production station (11) initiating the transport task, said production station being located in a production plane below the transport plane,
d) transferring the full or empty transport unit (12) from the transport vehicle (30) to the transfer unit (17) in a transfer position,
e) lowering the full or empty transport unit (12) by means of a lift arrangement from the transport plane into a transfer plane located below the transport plane,
wherein the steps d) and e) are also able to be carried out in reverse sequence and the transport vehicle (30) is released for the next transport task after the transfer of the full or empty transport unit (12) to the transfer unit (17), wherein the full or empty transport units (12), which in each case are formed from a load carrier (22) and a loaded goods carrier (21), after transfer from the transport vehicle (30) to the transfer unit (17) are transported by the lift arrangement vertically downwards into a first transfer plane, wherein the full or empty loaded goods carrier (21) is removed from the load carrier (22) in the lower transfer plane, transported to a station for altering the filling level of the loaded goods carrier (21) and transferred thereto.

2. Method according to claim 1, **characterised in that** in addition to the transfer units (17), buffer stores also configured in the region of the rail network (16) and/or intermediate stores assigned to the transport system (15) which, as a decentralised store (20) comprising at least one storage shelf, in addition to the central store (13), form part of the storage system (14), request full or empty transport units (12) with the material flow control (18) and transport vehicles (30) are delivered thereto.

3. Method according to claim 2, **characterised in that** the transport tasks are assigned priorities in sequence, wherein the priority is optionally determined from the urgency and/or the precedence of a material and/or the precedence of a transfer unit (17) or, respectively, a production station (11) and/or the precedence of a buffer store or an intermediate store and/or the precedence of production tasks by the material flow control (18).

4. Method according to any one of claims 1 to 3, **characterised in that** the transport tasks are assigned by the material flow control (18) to those transport vehicles (30) which require the shortest overall time for carrying out the transport task, considering the start-up time and the transport time.

5. Method according to any one of claims 1 to 4, **characterised in that** two subtasks are handled by a single transport task, **in that** a full transport unit (12) is transferred from the transport vehicle (30) to the transfer unit (17) and subsequently an empty transport unit (12) is transferred from the transfer unit (17) to the same transport vehicle (30), or vice versa.

6. Method according to claim 5, **characterised in that** after removing the loaded goods carrier (21), the load carrier (22) is transported vertically downwards or upwards into a second transfer plane located below the transport plane, in order to receive a loaded goods carrier (21) with an altered filling level, wherein the loaded goods carrier (21) with the altered filling level is transferred to the load carrier (22) and the transport unit (12) reset thereby is then transported vertically upwards into the transport plane in which the transport unit (12) is transferred to a transport vehicle (30) previously requested and provided by the material flow control (18).

7. Method according to any one of claims 1 to 6, **characterised in that** the central store (13) and/or each decentralised store (20) and/or each buffer store is controlled or, respectively, managed by a storage management system.

8. Method according to any one of claims 1 to 7, **characterised in that** free transport vehicles (30) and conveying vehicles (30) provided with full or empty transport units (12) move within the storage and transport system (14, 15) in order to deliver, on the one hand, full or empty transport units (12) to a transfer unit (17) and, on the other hand, to retrieve transport units (12) altered in the filling level from a transfer unit (17).

9. Method according to any one of claims 1 to 8, **characterised in that** at least one transfer unit (17) which is assigned to a tray filler, which in turn is assigned to a maker, namely a filter manufacturing machine or a cigarette manufacturing machine, requests empty trays as loaded goods carriers (21) to receive rod-shaped articles, wherein the empty trays together with the load carrier (22) are transported into the lower transfer plane, removed there from the load carrier (22) and transported to the tray filler and transferred thereto.

10. Method according to claim 9, **characterised in that** the trays filled by the tray filler are transferred back to the transfer unit (17) and transferred therefrom to a requested load carrier (22) which is optionally already available at the transfer unit (17) or delivered by a transport vehicle (30), wherein the full transport units (12) formed from the load carrier (22) and trays are transported from the transfer plane upwards into the transport plane and transferred there to the requested transport vehicle (30) so that the full transport unit (12) is introduced into the storage and transport system (14, 15) for further use.

11. Method according to any one of claims 1 to 10, **characterised in that** at least one transfer unit (17) which is assigned to a tray discharger which in turn is assigned to a maker, namely a filter assembly machine or a packaging machine or a multi-segment filter manufacturing machine, requests full trays as loaded goods carriers (21) with rod-shaped articles, wherein the full trays together with the load carrier (22) are transported into the lower transfer plane, removed there from the load carrier (22) and transported to the tray discharger and transferred thereto.

12. Method according to claim 11, **characterised in that** the trays emptied by the tray discharger are transferred back to the transfer unit (17) and transferred therefrom to a requested load carrier (22) which optionally is already available at the transfer unit (17) or delivered by a transport vehicle (30), wherein the empty transport units (12) formed from the load carriers (22) and trays are transported from the transfer plane upwards into the transport plane and transferred there to the requested transport vehicle (30) so that the empty transport unit (12) is introduced into the storage and transport system (14, 15) for further use.

13. Method according to any one of claims 9 to 12, **characterised in that** a guard hood (26) assigned to the load carrier (22) is removed from the load carrier (22) before being transported into the transfer plane and after being transported back into the transport plane is placed onto the load carrier (22).

14. Method according to any one of claims 1 to 13, **characterised in that** at least one transfer unit (17) which is assigned to a bobbin loader which in turn is assigned to a maker, namely a filter manufacturing machine or a cigarette manufacturing machine or a packaging machine or a film wrapper, requests a load carrier (22) with a loaded goods carrier (21) carrying at least one bobbin, wherein the at least one loaded goods carrier (21) carrying at least one bobbin together with the load carrier (22) is transported into the lower transfer plane, removed there from the loaded goods carrier (22) and transported to the maker and transferred thereto, wherein the load carrier (22) which is without a loaded goods carrier is subsequently transported from the transfer plane upwardly into the transport plane and transferred there to the requested transport vehicle (30), so that the empty load carrier (22) is introduced into the storage and transport system (14, 15) for further use.

15. Method according to any one of claims 1 to 14, **characterised in that** at least one transfer unit (17) requests a load carrier (22) with a loaded goods carrier (21) receiving spare parts and/or wearing parts, wherein the loaded goods carrier (21) carrying the spare parts and/or wearing parts, together with the load carrier (22), is transported into the lower transfer plane and removed there from the load carrier (22), wherein the load carrier (22) is subsequently transported with an empty loaded goods carrier or without a loaded goods carrier (21) from the transfer plane upwards into the transport plane and transferred there to the requested transport vehicle (30), so that the free load carrier (22) or, respectively, the empty loaded goods carrier (21) is introduced for further use into the storage and transport system (14, 15).

16. Method according to claim 15, **characterised in that** the supply of the transfer unit (17) with the spare parts and/or wearing parts is initiated by an operator or a maintenance plan or requirement plan stored in the material flow control (18).

17. Method according to any one of claims 14 to 16, **characterised in that** a free load carrier (22) is requested by a transfer unit (17) in order to retrieve a loaded goods carrier (21) provided with the tail strip.

18. Method according to any one of claims 1 to 17, **characterised in that** the full or, respectively, loaded and empty loaded goods carriers (21) are stored in the central store (13), decentralised store (20), buffer store, on the rail network (16) or directly in the transfer unit (17) with or without the load carrier (22) and with or without the transport vehicle (30).

19. Method according to any one of claims 1 to 18, **characterised in that** the transport vehicles (30) and/or the load carriers (22) and/or the loaded goods carriers (21) and/or the material to be transported are localised and/or tracked by machine-readable and/or electronic identification carriers.

20. Method according to claim 19, **characterised in that** the localisation and/or tracking takes place via a satellite navigation system and at least one indoor transmitter.

21. Method according to any one of claims 9 to 20, **characterised in that** empty trays are fully emptied and/or cleaned in the vicinity of the tray discharger and/or immediately before being supplied to the tray filler.

22. Method according to any one of claims 11 to 21, **characterised in that** the full trays after being filled in the tray filler are checked in the region between the tray filler and the transfer unit (17) for conformity and such full trays which are identified as not having conformity are prevented from being introduced into the storage and transport system (14, 15).

23. Method according to any one of claims 14 to 22, **characterised in that** when transferred by means of a transfer unit (17) from the storage system (14) to the transport system (15), the bobbins are checked for their conformity, and such bobbins which are identified as not having conformity are prevented from being introduced into the transport system (15).

24. Method according to any one of claims 1 to 23, **characterised in that** the loaded goods carrier (21) and, in particular, the full trays filled with rod-shaped articles are weighed before storing in the storage system (14) and after removing from the storage system (14).

25. Method according to claim 24, **characterised in that** a weight difference is detected which, when exceeding an upper limit value and when falling below a lower limit value, initiates the ejection of loaded goods carriers (21) from the storage and transport system (14, 15) via a transfer unit (17).

26. Method according to any one of claims 1 to 25, **characterised in that** full loaded goods carriers (21), i.e. provided with material, are transferred according to predetermined criteria and/or randomly directly from the storage and transport system (14, 15) into a quality securing station (25).

## Revendications

1. Procédé destiné à l'alimentation et à l'évacuation, commandées en fonction des besoins, d'au moins deux stations de production (11) de l'industrie de traitement du tabac en, ou respectivement de, unités de transport (12) pleines et/ou vides qui sont déplacées sur rails à l'aide de véhicules de transport (30) automoteurs à l'intérieur d'un système de stockage et de transport qui est configuré comme système aérien avec un dépôt central (13) ayant au moins une étagère de stockage comme système de stockage (14) et avec un réseau de rails (16) faisant partie du système de transport (15), auquel réseau de rail chaque station de production (11) est reliée, vers chaque station de production (11) pour l'alimentation et de la station de production (11) pour l'évacuation,
**caractérisé par** les étapes suivantes :
a) demander à une commande de flux de matière (18), par un dispositif de transfert (17) qui constitue un maillon de liaison entre le système de stockage et de transport (14, 15) et la station de production (11) associée, une unité de transport (12) pleine ou vide qui est disponible à l'intérieur du système de stockage et de transport (14, 15),
b) donner, par la commande de flux de matière (18), un ordre de transport à un véhicule de transport (30) avec l'unité de transport (12) pleine ou vide demandée,
c) déplacer le véhicule de transport (30), avec l'unité de transport (12) pleine ou vide, dans le plan de transport, sur le réseau de rails (16), de la position de départ du véhicule de transport (30) jusqu'au dispositif de transfert (17) qui déclenche l'ordre de transport, d'une station de production (11) qui est située dans un plan de production en-dessous du plan de transport,
d) transférer l'unité de transport (12) pleine ou vide, à une position de transfert, du véhicule de transport (30) au dispositif de transfert (17),
e) descendre l'unité de transport (12) pleine ou vide, à l'aide d'un dispositif élévateur, du plan de transport vers un plan de transfert situé en-dessous du plan de transport,
les étapes d) et e) pouvant également être effectuées dans l'ordre inverse et le véhicule de transport (30) étant mis à disposition pour un ordre de transport suivant après le transfert de l'unité de transport (12) au dispositif de transfert (17), les unités de transport (12) pleines ou vides qui sont constituées chacune d'un porte-charge (22) et un support pour objets à charger (21), étant transportées, après leur transfert du véhicule de transport (30) au dispositif de transfert (17), par le dispositif élévateur verticalement vers le bas vers un premier plan de transfert, le support pour objets à charger (21) plein ou vide étant enlevé du porte-charge (22) au plan de transfert inférieur, transporté vers une station pour changer le niveau de remplissage des supports pour objets à charger (21) et transféré à cette dernière.

2. Procédé selon la revendication 1, **caractérisé en ce que**, en dehors des dispositifs de transfert (17), des dépôts tampons établis aux alentours du réseau de rails (16) et/ou des dépôts intermédiaires associés au système de transport (15) qui font partie, en tant que dépôt décentralisé (20) comprenant au moins une étagère de stockage et en plus de l'dépôt central (13), du système de stockage (14), demandent à la commande de flux de matière (18) des unités de transport (12) pleines ou vides et sont alimentés par les véhicules de transport (30).

3. Procédé selon la revendication 2, **caractérisé en ce que** les ordres de transport sont donnés en fonction de leur priorité, la priorité étant déterminée par la commande de flux de matière (18) soit à partir de l'urgence et/ou de la priorité d'une matière et/ou de la priorité d'un dispositif de transfert (17) ou d'une station de production (11) et/ou de la priorité d'un dépôt tampon ou d'un dépôt intermédiaire et/ou de la priorité de commandes de production.

4. Procédé selon l'une des revendications 1 à 3, **caractérisé en ce que** les ordres de transport sont donnés par la commande de flux de matière (18) à ceux des véhicules de transport (30) qui, en tenant compte du temps pour arriver et du temps de transport, ont besoin du temps total le plus court pour exécuter l'ordre de transport.

5. Procédé selon l'une des revendications 1 à 4, **caractérisé en ce que**, en exécutant un seul ordre de transport, deux ordres subordonnés sont exécutés en transférant une unité de transport (12) pleine du véhicule de transport (30) au dispositif de transfert (17) et ensuite une unité de transport (12) vide du dispositif de transfert (17) au même véhicule de transport (30) ou vice versa.

6. Procédé selon la revendication 5, **caractérisé en ce que**, après l'enlèvement du support pour objets à charger (21), le porte-charge (22) est transporté verticalement vers le bas ou vers le haut vers un deuxième plan de transfert situé en-dessous du plan de transport, afin de recevoir un support pour objets à charger (21) ayant un niveau de remplissage changé, le support pour objets à charger (21) avec le niveau de remplissage changé étant transféré au porte-charge (22) et l'unité de transport (12) ainsi rétablie étant transportée ensuite verticalement vers le haut vers le plan de transport dans lequel l'unité de transport (12) est transférée à un véhicule de transport (30) préalablement demandé à la commande de flux de matière (18) et mis à disposition.

7. Procédé selon l'une des revendications 1 à 6, **caractérisé en ce que** le dépôt central (13) et/ou chaque dépôt décentralisé (20) et/ou chaque dépôt tampon est commandé ou géré par un système de gestion de dépôt.

8. Procédé selon l'une des revendications 1 à 7, **caractérisé en ce que**, à l'intérieur du système de stockage et de transport (14, 15), des véhicules de transport (30) vides et des véhicules de transport (30) portant des unités de transport (12) pleines ou vides sont déplacés, afin de transporter des unités de transport (12) pleines ou vides vers un dispositif de transfert (17), d'une part, et afin de chercher des unités de transport (12) ayant un niveau de remplissage changé d'un dispositif de transfert (17) d'autre part.

9. Procédé selon l'une des revendications 1 à 8, **caractérisé en ce qu'**au moins un dispositif de transfert (17) associé à un dispositif de remplissage de réceptacles qui lui-même est associé à un actionneur, à savoir une machine de fabrication de filtres ou une machine de fabrication de cigarettes, demande des réceptacles vides comme supports pour objets à charger (21) pour recevoir des articles en forme de tige, les réceptacles vides étant transportés ensemble avec le porte-charge (22) vers le plan inférieur de transfert, y étant enlevés du porte-charge (22) et étant transportés vers le dispositif de remplissage de réceptacles et étant transférés à celui-ci.

10. Procédé selon la revendication 9, **caractérisé en ce que** les réceptacles remplis par le dispositif de remplissage de réceptacles sont retransférés au dispositif de transfert (17) et sont transférés de celui-ci au porte-charge (22) demandé qui est soit déjà à disposition au dispositif de transfert (17) soit apporté par un véhicule de transport (30), les unités de transport (12) pleines formées par un porte-charge (22) et des réceptacles étant transportées du plan de transfert vers le haut vers le plan de transport et y étant transférées au véhicule de transport (30) demandé, si bien que l'unité de transport (12) pleine soit introduite dans le système de stockage et de transport (14, 15) pour une suite d'utilisation.

11. Procédé selon l'une des revendications 1 à 10, **caractérisé en ce qu'**au moins un dispositif de transfert (17) associé à un dispositif videur de réceptacle qui lui-même est associé à un actionneur, à savoir une machine de pose de filtre ou une machine d'emballage ou une machine de fabrication de filtre à segments multiples, demande des réceptacles pleins comme supports pour objets à charger (21) chargés d'articles en forme de tige, les réceptacles pleins étant transportés ensemble avec le porte-charge (22) vers le plan inférieur de transfert, y étant enlevés du porte-charge (22) et étant transportés vers le dispositif videur de réceptacles et étant transférés à celui-ci.

12. Procédé selon la revendication 11, **caractérisé en ce que** les réceptacles vidés par le dispositif videur de réceptacles sont retransférés au dispositif de transfert (17) et sont transférés de celui-ci à un porte-charge (22) demandé qui est soit déjà à disposition au dispositif de transfert (17) soit apporté par un véhicule de transport (30), les unités de transport (12) vides formées par un porte-charge (22) et des réceptacles étant transportées du plan de transfert vers le haut vers le plan de transport et y étant transférées au véhicule de transport (30) demandé, si bien que l'unité de transport (12) vide soit introduite dans le système de stockage et de transport (14, 15) pour une suite d'utilisation.

13. Procédé selon l'une des revendications 9 à 12, **caractérisé en ce qu'**une housse de protection (26) associée au porte-charge (22) est enlevée du porte-charge (22) avant le transport vers le plan de transfert et est remise sur le porte-charge (22) après le transport en retour vers le plan de transport.

14. Procédé selon l'une des revendications 1 à 13, **caractérisé en ce qu'**au moins un dispositif de transfert (17) qui est associé à un automate à bobine qui lui-même est associé à actionneur, à savoir une machine de fabrication de filtre ou une machine de fabrication de cigarettes ou une machine d'emballage ou une machine pour envelopper dans un film, demande un porte-charge (22) avec un support pour objets à charger (21) portant au moins une bobine, le support pour objets à charger (21) portant au moins une bobine étant transporté, ensemble avec le porte-charge (22), vers le plan inférieur de transfert, y étant enlevé du porte-charge (22) et étant transporté vers l'actionneur et étant transféré à celui-ci, le porte-charge (22) sans support pour objets à charger étant ensuite transporté du plan de transfert vers le haut vers le plan de transport et y étant transféré au véhicule de transport (30) demandé, si bien que le porte-charge (22) vide soit introduit dans le système de stockage et de transport (14, 15) pour une suite d'utilisation.

15. Procédé selon l'une des revendications 1 à 14, **caractérisé en ce qu'**au moins un dispositif de transfert (17) demande un porte-charge (22) avec un support pour objets à charger (21) recevant des pièces de rechange et/ou des pièces d'usure, le support pour objets à charger (21) portant les pièces de rechange et/ou les pièces d'usure étant transporté, ensemble avec le porte-charge (22), vers les plan inférieur de transfert et y étant enlevé du porte-charge (22), le porte-charge (22) avec un support vide pour objets à charger (21) ou sans support pour objets à charger étant ensuite transporté du plan de transfert vers le haut vers le plan de transport et y étant transféré au véhicule de transport (30) demandé, si bien que le porte-charge (22) vide ou le support vide pour objets à charger (21) soit introduit dans le système de stockage et de transport (14, 15) pour une suite d'utilisation.

16. Procédé selon la revendication 15, **caractérisé en ce que** l'alimentation du dispositif de transfert (17) en pièces de rechange et/ou en pièces d'usure est déclenchée par un opérateur ou par un plan de maintenance ou un plan de besoins enregistré dans la commande de flux de matière (18).

17. Procédé selon l'une des revendications 14 à 16, **caractérisé en ce qu'**un porte-charge (22) vide est demandé par un dispositif de transfert (17), afin de chercher un support pour objets à charger (21) pourvu de matière résiduelle.

18. Procédé selon l'une des revendications 1 à 17, **caractérisé en ce que** les supports pour objets à charger (21) pleins ou pourvus d'objets ou vides sont stockés au dépôt central (13), au dépôt décentralisé (20), au dépôt tampon, sur le réseau de rails (16) ou directement dans le dispositif de transfert (17), avec ou sans porte-charge (22) ainsi qu'avec ou sans véhicule de transport (30).

19. Procédé selon l'une des revendications 1 à 18, **caractérisé en ce que** les véhicules de transport (30) et/ou les portes-charge (22) et/ou les supports pour objets à charger (21) et/ou la matière à transporter sont localisés et/ou suivis à l'aide de supports de marquage lisibles par machine et/ou électroniques.

20. Procédé selon la revendication 19, **caractérisé en ce que** la localisation et/ou le suivi sont effectués via un système de navigation par satellite et au moins un transmetteur pour espace intérieur.

21. Procédé selon l'une des revendications 9 à 20, **caractérisé en ce que** des réceptacles sont entièrement vidés et/ou nettoyés à proximité du dispositif videur de réceptacles et/ou immédiatement avant l'acheminement au dispositif de remplissage de réceptacles.

22. Procédé selon l'une des revendications 11 à 21, **caractérisé en ce que** les réceptacles pleins sont vérifiés, après remplissage dans le dispositif de remplissage, dans la zone entre le dispositif de remplissage et le dispositif de transfert (17), en ce qui concerne leur conformité et que des réceptacles qui ne sont pas reconnus comme conformes, sont empêchés d'être introduits dans le système de stockage et de transport (14, 15).

23. Procédé selon l'une des revendications 14 à 22, **caractérisé en ce que** les bobines sont vérifiées, lors de leur transfert à l'aide d'un dispositif de transfert (17), du système de stockage (14) au système de transport (15), en ce qui concerne leur conformité et que les bobines qui ne sont pas reconnues comme conformes, sont empêchées d'être introduites dans le système de transport (15).

24. Procédé selon l'une des revendications 1 à 23, **caractérisé en ce que** les supports pour objets à charger (21) et notamment les réceptacles remplis d'articles en forme de tige, sont pesés avant dépôt dans le système de stockage (14) et après retrait du système de stockage (14).

25. Procédé selon la revendication 24, **caractérisé en ce qu'**une différence de poids est déterminée qui, lorsqu'elle dépasse une valeur limite supérieure ou lorsqu'elle passe en-dessous d'une valeur limite inférieure, déclenche une sortie des supports pour objets à charger (21), du système de stockage et de transport (14, 15) via un dispositif de transfert (17).

26. Procédé selon l'une des revendications 1 à 25, **caractérisé en ce que** des supports pour objets à charger (21) pleins, donc pourvus de matière, sont transférés directement, selon des critères prédéterminés et/ou de manière aléatoire, du système de stockage et de transport (14, 15) à une station de contrôle de qualité (25).
